# EUROPÄISCHE PATENTSCHRIFT

(11) **EP 3 778 168 B1**
(45) Veröffentlichungstag und Bekanntmachung des Hinweises auf die Patenterteilung: **04.10.2023**
(21) Anmeldenummer: 20190614.6
(22) Anmeldetag: 12.08.2020
(51) Int. Cl.: B29C 33/30, B29C 45/73

(54) **FORMFLEXIBLER EINSATZ, FORMGEBENDES WERKZEUG, VERWENDUNG EINES FORMFLEXIBLEN EINSATZES, VERFAHREN ZUR HERSTELLUNG EINES FORMGEBENDEN WERKZEUGS, VERFAHREN ZUR HERSTELLUNG EINES KUNSTSTOFF ENTHALTENDEN FORMTEILS, KUNSTSTOFF ENTHALTENDES FORMTEIL**
FLEXIBLE INSERT, SHAPING TOOL, USE OF A FLEXIBLE INSERT, METHOD FOR MANUFACTURING A SHAPING TOOL, METHOD FOR PRODUCING A MOULDED PART CONTAINING PLASTIC, MOULDED PART CONTAINING PLASTIC
INSERT DE FORME FLEXIBLE, OUTIL DE FAÇONNAGE, UTILISATION D'UN INSERT DE FORME FLEXIBLE, PROCÉDÉ DE FABRICATION D'UN OUTIL DE FAÇONNAGE, PROCÉDÉ DE FABRICATION D'UNE PIÈCE MOULÉE CONTENANT DE LA MATIÈRE PLASTIQUE, PIÈCE MOULÉE CONTENANT DE LA MATIÈRE PLASTIQUE

(30) Priorität: 14.08.2019 DE 102019121862
(43) Veröffentlichungstag der Anmeldung: 17.02.2021
(73) Patentinhaber: Universität Kassel, 34125 Kassel (DE)
(72) Erfinder: Mieth, Florian, 34223 Fuldatal (DE); Sälzer, Philipp, 34302 Guxhagen (DE); Tromm, Mike, 34119 Kassel (DE); Heim, Hans-Peter, 33332 Gütersloh (DE)
(74) Vertreter: Kador & Partner Part mbB

(56) Entgegenhaltungen:
- WO-A2-2012/093136
- DE-A1- 19 620 002
- DE-A1-102016 103 616
- DE-B4- 19 620 002
- GB-A- 2 268 699
- US-A1- 2018 222 107
- MIKE TROMM ET AL: "Schaum nach Maß", KUNSTSTOFFE, Bd. 2, Nr. 2018, 1. Februar 2018 (2018-02-01), Seiten 56-61, XP055754372,

## Beschreibung

Die Erfindung betrifft einen formflexiblen Einsatz für eine Ausnehmung einer Werkzeughälfte eines Gieß- oder Spritzgießwerkzeugs. Gegenstand der Erfindung sind weiterhin ein formgebendes Gieß- oder Spritzgießwerkzeug, umfassend einen hier beschriebenen formflexiblen Einsatz, und die Verwendung eines hier beanspruchten formflexiblen Einsatzes zur Herstellung eines solchen, wenigstens eine Werkzeughälfte umfassenden formgebenden Gieß- oder Spritzgießwerkzeugs. Zudem betrifft die Erfindung ein Verfahren zur Herstellung eines solchen wenigstens eine Werkzeughälfte umfassenden formgebenden Werkzeugs, welches unter Verwendung eines hier beschriebenen formflexiblen Einsatzes durchgeführt wird, sowie ein formgebendes Werkzeug, erhältlich nach einem solchen Verfahren. Gegenstand der Erfindung sind außerdem die Verwendung eines hier beschriebenen formflexiblen Einsatzes zur Herstellung eines Kunststoff enthaltenden Formteils, zwei Verfahren zur Herstellung eines Kunststoff enthaltenden Formteils, welche jeweils unter Verwendung eines hier beanspruchten formflexiblen Einsatzes durchgeführt werden, und ein Kunststoff enthaltendes Formteil, erhältlich nach einem dieser Verfahren.

Rekonfigurierbare beziehungsweise formflexible formgebende Werkzeuge und ihre Verwendung zur Herstellung von Formteilen oder Formen, insbesondere aus Kunststoff, sind im Stand der Technik bekannt und beispielsweise in GB2268699A, WO2012/093136A2, DE102016103616A1 und US2018/222107A1 beschrieben. Ein formflexibles Spritzgießwerkzeug ist in Mike Tromm et al: "Schaum nach Maß", KUNSTSTOFFE, Bd. 2, Nr. 2018 beschrieben.

Im Bereich der kundenindividuellen Massenproduktion (engl. *Mass Customization*) gewinnt eine einfache, rasche und kostengünstige Ermöglichung von Geometrievariationen bei Formteilen oder Formen, insbesondere aus Kunststoff, zunehmend an Bedeutung. Ziel der kundenindividuellen Massenproduktion ist es, ausgehend von einem Basisangebot Produkte in vielfältigen Variationsmöglichkeiten zur Verfügung zu stellen. Mithin kann grundsätzlich fast jeder Kunde ein seinen Vorstellungen entsprechendes individuelles Produkt erwerben. Es wird eine kundenspezifische Problemlösung bei gleichzeitiger Nutzung der Kostenvorteile einer prozessorientierten Massenfertigung ermöglicht. Die Vorteile der Massen- und Einzelfertigung werden mittels moderner Fertigungsprozesse und Nutzung modernster Informations- und Kommunikationstechnologien kombiniert.

Eine Variante der kundenindividuellen Massenproduktion ist die Individualisierung am Verkaufsort (engl. *Point of Delivery Customization*), z. B. bei Sportschuhen. Hier kommen derzeit maßgeblich 3D-Druckverfahren zum Einsatz, um individualisierte Innensohlen herzustellen. Zukünftig sollen mittels dieser Technik auch individualisierte Außensohlen und Schuhe gefertigt werden. Um die für einen 3D-Druck einer individualisierten Innensohle erforderlichen Druckdaten zu erhalten, wird der Fuß des Kunden üblicherweise geometrisch vermessen und gegebenenfalls die Lastenverteilung ermittelt. Die Datenermittlung erfolgt in der Regel mittels Fotographie, 3D-Scans, Vermessung der Druckverteilung und des Abrollverhaltens. Im Anschluss an die Datenerfassung werden die zuvor überarbeiteten Daten an einen 3D-Drucker gesendet, welcher das jeweilige Produkt erzeugt. Nachteilig an 3D-Druckverfahren sind insbesondere der Zeit- und Kostenaufwand für die Datenerfassung und -überarbeitung. Zudem eignen sie sich lediglich zur Herstellung geringer Stückzahlen.

In Serie erfolgt die Produktion von Formteilen, insbesondere von Kunststoff- und Schaumstoffformteilen, üblicherweise mittels Gieß-, Spritzgieß-, Thermoform- oder Pressformverfahren. Von Nachteil ist dabei, dass die in der Regel zum Einsatz kommenden formgebenden Werkzeuge keine oder nur eine relativ umständliche Variation bezüglich der Produktgeometrie zulassen. Denn die standardmäßig verwendeten Werkzeuge weisen exakt die invariable Negativform des jeweils in Serie herzustellenden Produkts auf. Geometrievariationen zwecks Individualisierung von Produkten sind allenfalls mit zusätzlichem Zeit-, Arbeits- und damit Kostenaufwand realisierbar, z. B. unter Verwendung von Wechseleinsätzen oder einfach herzustellender Kleinserienwerkzeuge.

Im Falle der Verwendung eines 3D-Druckverfahrens zur Herstellung eines Kunststoff enthaltenden Formteils wird das produzierte Werkstück häufig einer mechanischen Nachbearbeitung, wie z. B. Fräsen, zugeführt. Dies ist arbeits-, zeit- und kostenintensiv.

Aus DE 100 39 023 A1 ist eine Vorrichtung zur Herstellung eines Rohlings für ein Bauteil bekannt, insbesondere ein Bauteil für einen Cubing-Aufbau, d. h. einen Modellaufbau zur Beurteilung der Maßhaltigkeit von Automobilanbauteilen. Diese Vorrichtung weist einen Aufnahmeraum für die Einbringung von Gusswerkstoff zur Bildung des Rohlings auf, welcher durch einen Boden sowie durch Seitenwände begrenzt wird. Dabei wird der Boden von einer Mehrzahl in Höhenrichtung unabhängig voneinander verstellbarer Stempel gebildet, die eine geschlossene Bodenfläche ergeben. Nachteilig an dieser Vorrichtung ist insbesondere, dass die verstellbaren Stempel auch für die Bildung einer geschlossenen Bodenfläche genutzt werden. Denn dadurch erfordert die Fertigung einer solchen Vorrichtung ein hohes Maß an Präzision und ist als relativ kostenintensiv zu bewerten. Zudem besteht - unabhängig von der für die Fertigung und Auswahl der einzelnen Stempel aufgewandten Präzision -während der Herstellung eines Rohlings die Gefahr eines Verklemmens zweier oder mehrerer Stempel. Mithin ist eine Vorrichtung gemäß DE 100 39 023 A1 nur eingeschränkt für die Herstellung einer größeren Stückzahl von individualisierten Formen oder Formteilen geeignet.

In US 5,846,464 A ist ein Verfahren zur Herstellung von Verbundbauteilen unter Verwendung einer rekonfigurierbaren modularen Vorrichtung offenbart. In einem ersten Schritt erfolgt das Erzeugen eines Bauteildesigns mittels eines Computergrafiksystems. Anschließend wird auf einem mit einem Servoantrieb versehenen Mechanismus eine Anordnung zweier oder mehrerer Gummiblöcke positioniert, welche zu einem Werkzeugmodul verbunden werden. Die Anordnung weist Öffnungen auf, innerhalb derer verschiebbare Stifte angeordnet sind. Mit den oberen Enden der Stifte ist eine flexible Folie, z. B. eine Kautschukfolie, verbunden. Die Stifte werden so eingestellt, dass mit der flexiblen Folie die Kontur des herzustellenden Verbundteils angenähert wird. Das Werkzeugmodul wird schließlich vom Antriebsmechanismus entfernt und als Form in einem Autoklav zum Aushärten von Verbundwerkstoffen zu einem Verbundbauteil verwendet. Das in US 5,846,464 A beschriebene Verfahren ist zwar für die Herstellung einzelner individualisierter Kompositbauteile geeignet, nicht aber für eine Produktion unterschiedlicher individualisierter Verbundbauteile in einem kontinuierlich geführten Prozess. Denn das offenbarte Werkzeugmodul, umfassend verschiebbare Stifte, wird ohne den Antriebsmechanismus in einem Autoklav zum Aushärten von Verbundwerkstoffen oder in einem anderen Formverfahren eingesetzt. Für sich genommen, d. h. ohne eine Steuer- und/oder Regeleinheit, ist ein solches Werkzeugmodul jedoch nicht rekonfigurierbar. Mithin ist im Falle einer Geometrievariation zunächst eine Entnahme des Werkzeugmoduls aus der für das jeweilige Formverfahren vorgesehenen Vorrichtung erforderlich, um es dann - zwecks Rekonfiguration der Stifte - mit dem Antriebsmechanismus zu verbinden.

Insgesamt sind die literaturbekannten rekonfigurierbaren formgebenden Werkzeuge als unbefriedigend zu bewerten; einerseits aufgrund ihrer vergleichsweise aufwändigen Fertigung und ihrer Störanfälligkeit, andererseits wegen ihrer mangelnden Eignung für den Einsatz in einem kontinuierlichen Verfahren zur Herstellung verschiedener individualisierter Formen oder Formteile.

Der Erfindung liegt daher die Aufgabe zugrunde, diese und weitere Nachteile des Standes der Technik zu überwinden und ein formflexibles, d. h. rekonfigurierbares, formgebendes Gieß- oder Spritzgießwerkzeug bereitzustellen, mittels dessen Kunststoff enthaltende Formteile und Formen unterschiedlicher Geometrien in einem kontinuierlichen Verfahren einfach, präzise, reproduzierbar und ökonomisch, auch in Kleinserien- oder Einzelteilfertigung, herstellbar sind. Zudem sollen ein einfaches und kostengünstiges Verfahren zur Herstellung eines solchen formgebenden Werkzeugs zur Verfügung gestellt werden, sowie ein formgebendes Werkzeug, welches mittels eines solchen Verfahrens einfach, reproduzierbar und vergleichsweise kostengünstig herstellbar ist. Weiterhin soll ein vergleichsweise simples und unter ökonomischen Aspekten günstiges Verfahren zur Herstellung Kunststoff enthaltender Formteile und Formen unterschiedlicher Geometrien, auch in Kleinserien- oder Einzelteilfertigung, zur Verfügung gestellt werden, welches unter Verwendung eines im Folgenden beschriebenen rekonfigurierbaren beziehungsweise formflexiblen formgebenden Werkzeugs durchführbar ist, und ein Kunststoff enthaltendes Formteil, erhältlich nach einem solchen Verfahren.

Gelöst wird die Aufgabe durch einen formflexiblen Einsatz für eine Ausnehmung einer Werkzeughälfte eines formgebenden Gieß- oder Spritzgießwerkzeugs nach Anspruch 1.

Bei der Ausnehmung der Werkzeughälfte des formgebenden Werkzeugs handelt es sich im Falle eines Gieß- oder Spritzgießwerkzeugs, welches üblicherweise zwei Werkzeughälften umfasst, um eine Kavität.

Die Hauptachse eines Verstellelements ist in der Regel identisch mit dessen Longitudinalachse.

Der beanspruchte formflexible Einsatz kann unterschiedliche Materialien aufweisen oder aus einem einzigen Material oder Materialgemisch gefertigt sein. Hinsichtlich der Auswahl eines Materials, seiner Dimensionierung, der geometrischen Grundform seiner Basis, z. B. viereckig, rund, oval, sowie der Anordnung der unteren Endbereiche der Verstellelemente zueinander ist der formflexible Einsatz im Wesentlichen unbeschränkt. Mithin sind seine Variations- und Verwendungsmöglichkeiten im Bereich der Herstellung von Kunststoff enthaltenden Formteilen nahezu unbegrenzt. Gemäß der vorliegenden Erfindung umfasst der Begriff "Formteil" auch eine "Form" beziehungsweise einen "Rohling" für ein zu fertigendes, insbesondere einen Kunststoff aufweisendes, Formteil. Die Begriffe "Formteil" und "Werkstück" werden synonym verwendet.

Durch die Verwendung eines hier beanspruchten formflexiblen Einsatzes in einem formgebenden Werkzeug ist in einem kontinuierlichen Prozess zur Herstellung von Kunststoff enthaltenden Formteilen eine Vielzahl von Formteilen mit unterschiedlichen Geometrien einfach, präzise, reproduzierbar und ökonomisch produzierbar. Das gilt sowohl für den Fall, dass unmittelbar aufeinanderfolgend Serien, auch Kleinserien, von Formteilen herzustellen sind, welche unterschiedliche Geometrien aufweisen, als auch im Falle der Produktion von Einzelstücken mit verschiedenen Geometrien. Denn die Verstellelemente des formflexiblen Einsatzes sind vorteilhafterweise - je nach Ausführungsform des formflexiblen Einsatzes - innerhalb des formgebenden Werkzeugs individuell und somit ortsaufgelöst
a) relativ zu der Normalenrichtung reversibel längen- und neigungsverstellbar
   oder
b) temperierbar und relativ zu der Normalenrichtung reversibel längenverstellbar
   oder
c) temperierbar und relativ zu der Normalenrichtung reversibel neigungsverstellbar
   oder
d) temperierbar und relativ zu der Normalenrichtung reversibel längen- und neigungsverstellbar.

Eine für das zu produzierende Kunststoff enthaltende Formteil maßgeschneiderte Konfiguration der Verstellelemente ist - nach Auswahl eines hinsichtlich Material, Dimensionierung, der geometrischen Grundform seiner Basis, z. B. viereckig, rund, oval, sowie der Anordnung der unteren Endbereiche der Verstellelemente zueinander geeigneten formflexiblen Einsatzes - anhand der Konstruktionsdaten des herzustellenden Formteils computergestützt durchführbar. Die Konfiguration der Verstellelemente ist ohne Entnahme und/oder Austauschen des formflexiblen Einsatzes aus dem formgebenden Werkzeug einfach, rasch und reproduzierbar möglich. Im Falle eines Urformverfahrens, insbesondere eines Gieß- oder Spritzgießverfahrens, bei welchem üblicherweise zwei Werkzeughälften vorgesehen sind, wird durch die Konfiguration der Verstellelemente innerhalb wenigstens einer der beiden Werkzeughälften eines formgebenden Werkzeugs die Negativform des herzustellenden Produkts erzeugt. Insbesondere ist vorgesehen, dass wenigstens die dem Angusspunkt beziehungsweise Anspritzpunkt gegenüberliegende Werkzeughälfte des formgebenden Werkzeugs, d. h. die auf der beweglichen Seite beziehungsweise der Auswerferseite angeordnete Werkzeughälfte, einen hier beschriebenen formflexiblen Einsatz umfasst. Im Unterschied dazu wird im Falle eines Umformverfahrens, insbesondere eines Thermoformverfahrens oder Pressformverfahrens, üblicherweise durch die Konfiguration der Verstellelemente innerhalb einer einzigen Werkzeughälfte eines formgebenden Werkzeugs die Innen- oder Außenkontur des zu produzierenden Formteils nachgebildet, in Abhängigkeit davon, ob eine Positiv- oder Negativformung vorgesehen ist. Beim Negativformen kann zusätzlich ein Oberstempel beziehungsweise Vorstreckstempel vorgesehen sein, welcher ebenfalls einen hier beanspruchten formflexiblen Einsatz aufweisen kann.

Mithin kann bei Verwendung eines hier beschriebenen formflexiblen Einsatzes vorteilhafterweise auf das zeit- und kostenintensive Austauschen formgebender Werkzeuge und/oder Wechseleinsätze verzichtet werden. Infolgedessen entfallen zum einen Beschaffung, Wartung und gegebenenfalls Reparatur einer Vielzahl formgebender Werkzeuge und/oder von Wechseleinsätzen. Zum anderen werden Unterbrechungen im Verfahrensablauf für den Austausch formgebender Werkzeuge und/oder von Wechseleinsätzen vermieden. Zudem führt die Verwendung eines hier beschriebenen formflexiblen Einsatzes zu einer starken Vereinfachung und damit gegebenenfalls auch geringeren Störanfälligkeit eines Verfahrens zur Herstellung Kunststoff enthaltender Formteile.

Insbesondere im Rahmen der heutzutage im Trend liegenden kundenspezifischen Massenproduktion führt die Verwendung eines hier beschriebenen formflexiblen Einsatzes zu einer Prozessvereinfachung sowie Zeit- und Kostenersparnis. Ausgehend von Konstruktionsdaten, welche für eine Standardversion eines herzustellenden Kunststoff enthaltenden Formteils vorliegen, z. B. eines Partikelschaumteils für einen Sportschuh oder einen Fahrradhelm, können kundenspezifische Anpassungen reproduzierbar, präzise, einfach, rasch und vergleichsweise kostengünstig vorgenommen werden. Dazu sind lediglich Konstruktionsdaten der vom Kunden gewünschten Abwandlung der Standardversion zu ermitteln und gegebenenfalls umzuwandeln. Anhand dieser Daten erfolgt eine maßgeschneiderte Konfiguration der Verstellelemente des jeweiligen formflexiblen Einsatzes.

Im Falle eines Urformverfahrens, insbesondere eines Gieß- oder Spritzgießverfahrens, bestehen Variationsmöglichkeiten hinsichtlich der Verfahrensführung insbesondere bezüglich:
A. Konfiguration der Verstellelemente, gegebenenfalls auch während des Prozesses zur Durchführung von Kompressions- und Dekompressionshüben, insbesondere zur aktiven lokalen, d. h. ortsaufgelösten, Beeinflussung der Schaumstruktur und anderer Formteileigenschaften, wie z. B. einer bereichsabhängig oder punktuell variierenden Formteilhärte;
B. Füllvolumen der Ausnehmung beziehungsweise Kavität und infolgedessen Dosiervolumen, insbesondere bei Polyurethanschäumen (PUR-Schäumen), unter Berücksichtigung des Formteilvolumens und der gewünschten Formteilhärte;
C. Zusammensetzung des zu plastifizierenden Materials, insbesondere bei PUR-Schäumen, unter Berücksichtigung des Formteilvolumens und der gewünschten Formteilhärte.

Insgesamt ermöglicht die Verwendung eines hier beschriebenen formflexiblen Einsatzes in einem formgebenden Gieß- oder Spritzgießwerkzeug vorteilhafterweise die einfache, präzise, reproduzierbare und ökonomische Herstellung Kunststoff enthaltender Formteile und Formen unterschiedlicher Geometrien in einem kontinuierlichen Verfahren, und zwar auch in Kleinserien- oder Einzelteilfertigung. Mithin werden die Vorteile hoher Individualisierbarkeit mit denjenigen einer kostengünstigen Serienfertigung kombiniert.

Eine Ausführungsform des formflexiblen Einsatzes sieht vor, dass die unteren Endbereiche der Verstellelemente an der oberen Seite der Basis in einem vordefinierbaren Anordnungsmuster zueinander anordenbar oder angeordnet sind. Je nach herzustellendem Formteil kann ein Anordnungsmuster festgelegt werden, so dass maßgeschneiderte formflexible Einsätze zur Verfügung gestellt werden können. Möglich ist ein Anordnungsmuster mit einem einzigen, d. h. innerhalb des Anordnungsmusters ein- und demselben, vordefinierbaren Abstand. Alternativ können die unteren Endbereiche der Verstellelemente an der oberen Seite der Basis in unterschiedlichen Abständen zueinander angeordnet sein. Das kann vorteilhaft sein, um Eigenschaften eines herzustellenden Kunststoff enthaltenden Werkstücks ortsaufgelöst einstellen zu können und/oder das Formteil vor dem Abkühlprozess und/oder während des Abkühlprozesses, d. h. bis das Formteil formstabil ist, ortsaufgelöst optimal stützen zu können.

In einer anderen Ausführungsform des formflexiblen Einsatzes sind die Verstellelemente unabhängig voneinander stiftförmig, nadelförmig, dornförmig, keilförmig, konusförmig, quaderförmig oder plattenförmig ausgebildet. Dadurch wird der Gestaltungsspielraum bei der Herstellung des formflexiblen Einsatzes relativ groß.

Eine noch andere Variante des formflexiblen Einsatzes sieht vor, dass der untere Endbereich und/oder ein oberer Endbereich wenigstens eines Verstellelements einen polygonalen Querschnitt aufweist. Das Vorsehen eines polygonalen Querschnitts im unteren Endbereich kann beispielsweise im Falle eines stift- oder nadelförmigen Verstellelements zur Erhöhung der Gesamtstabilität des jeweiligen Verstellelements und/oder einer noch stabileren Anordnung des jeweiligen Verstellelements an der oberen Seite der Basis beitragen. Im oberen Endbereich eines Verstellelements kann das Vorhandensein eines polygonalen Querschnitts vorteilhaft sein, um als Kontakt- oder Auflagefläche für eine formflexible Schicht, z. B. eine Membran oder Folie, zu fungieren. Dann ist der obere Endbereich des jeweiligen Verstellelements vorteilhafterweise derart ausgestaltet, dass er lösbar mit der formflexiblen Schicht verbindbar ist. Das Entformen des formstabilen, Kunststoff enthaltenden Formteils kann so erfolgen, dass die formflexible Schicht im formgebenden Werkzeug verbleibt und somit unmittelbar wiederverwendbar ist. Alternativ kann die formflexible Schicht erst nach dem Entformen von dem hergestellten Formteil getrennt werden oder als eine Komponente des herzustellenden Formteils vorgesehen sein.

In einer noch anderen Ausführungsform des formflexiblen Einsatzes sind die Verstellelemente unabhängig voneinander kraft-, form- und/oder reibschlüssig und/oder stoffschlüssig mit der oberen Seite der Basis der Verstelleinheit verbindbar. Im einfachsten Fall ist ein Verstellelement lösbar, z. B. mittels einer Schraub- oder einer Steckverbindung, mit der oberen Seite der Basis verbindbar oder verbunden. Dann können bei Bedarf, z. B. zu Reparatur- und/oder Austauschzwecken, einzelne Verstellelemente besonders einfach und rasch entfernt und gegebenenfalls ersetzt werden. Auf diese Weise kann ein Austausch des gesamten Einsatzes vermieden werden, was besonders kosten- und ressourcenschonend ist. Sind alle oder ein Teil der Verstellelemente kraft-, form- und/oder reibschlüssig mit der oberen Seite der Basis der Verstelleinheit verbunden, kann das Anordnungsmuster durch Entfernen einzelner Verstellelemente und/oder Neuanordnung einzelner Verstellelemente - in für die Anordnung der Verstellelemente gegebenenfalls vorgesehenen, nicht besetzten Ausnehmungen - verändert werden. Die auf diese Weise einfach realisierbare Veränderung des Anordnungsmusters der Verstellelemente des formflexiblen Einsatzes stellt - alternativ oder zusätzlich zu der Höhen- und Neigungsverstellbarkeit und Temperierbarkeit der einzelnen Verstellelemente - eine weitere Möglichkeit der Optimierung beziehungsweise Anpassung des formflexiblen Einsatzes für die Herstellung eines bestimmten Formteils dar. Alternativ oder ergänzend zu einer kraft-, form- und/oder reibschlüssigen Verbindung ist das jeweilige Verstellelement stoffschlüssig, insbesondere mittels eines Klebstoffs oder einer Schweiß- oder Lötnaht, mit der oberen Seite der Basis verbindbar oder verbunden. Dies kann je nach Belastung der Verstellelemente, insbesondere durch Druckkräfte, während der Herstellung eines Kunststoff enthaltenden Formteils vorteilhaft sein.

In einer weiteren Ausführungsform des formflexiblen Einsatzes sind wenigstens zwei Ausnehmungen an der oberen Seite der Basis der Verstelleinheit vorgesehen. Dabei ist in jede Ausnehmung wenigstens ein unterer Abschnitt des unteren Endbereichs eines der Verstellelemente einbringbar. Beispielsweise sind jeweils eine der Ausnehmungen an der oberen Seite der Basis der Verstelleinheit und wenigstens der untere Abschnitt des unteren Endbereichs des darin einzubringenden Verstellelements komplementär oder zumindest im Wesentlichen komplementär zueinander ausgebildet.

Der Begriff "komplementär" bedeutet in diesem Zusammenhang, dass jeweils eine der Ausnehmungen an der oberen Seite der Basis der Verstelleinheit und der untere Abschnitt des unteren Endbereichs eines der Verstellelemente derart ausgebildet sind, dass sie kraft-, form- und/oder reibschlüssig miteinander verbindbar sind. Ist eine Ausnehmung "im Wesentlichen komplementär" zu dem einzubringenden unteren Abschnitt des unteren Endbereichs des jeweiligen Verstellelements ausgebildet, kann eine stoffschlüssige Verbindung vorgesehen sein. Möglich ist dann auch das Vorsehen eines Füllelements in der Ausnehmung, mittels dessen eine kraft-, form- und/oder reibschlüssige Verbindung des unteren Abschnitts des unteren Endbereichs des jeweiligen Verstellelements mit der zugehörigen Ausnehmung erzielbar ist. Alternativ oder ergänzend kann der untere Abschnitt des unteren Endbereichs des einzubringenden Verstellelements mit einem Verbindungselement kraft-, form- und/oder reibschlüssig und/oder stoffschlüssig verbindbar sein. Das Verbindungselement selbst ist wiederum kraft-, form- und/oder reibschlüssig und/oder stoffschlüssig mit der oberen Seite der Basis, insbesondere mit einer an der oberen Seite der Basis vorgesehenen Ausnehmung, verbindbar. Dabei ist die Ausnehmung vorzugsweise komplementär oder zumindest im Wesentlichen komplementär zu einem unteren Bereich des Verbindungselements ausgebildet. Bei einem einstückig ausgebildeten Verstellelement, welches auch neigungsverstellbar ist, kann vorgesehen sein, dass der untere Abschnitt des unteren Endbereichs des in eine Ausnehmung an der oberen Seite der Basis einzubringenden Verstellelements komplementär zu einer an einem oberen Ende des Verbindungselements vorgesehenen Gelenkpfanne ausgebildet ist. Ein von der Gelenkpfanne abgewandtes Ende des Verbindungselements ist dann in einer an der oberen Seite der Basis vorgesehenen Ausnehmung kraft-, form- und/oder reibschlüssig und/oder stoffschlüssig anordenbar.

In einer anderen Variante des formflexiblen Einsatzes ist eine erste Antriebseinheit zur Längen- und/oder Neigungsverstellung wenigstens eines längen- und/oder neigungsverstellbaren Verstellelements vorgesehen. Eine weitere Ausführungsform des formflexiblen Einsatzes sieht zusätzlich zu der ersten Antriebseinheit zur Längen- und/oder Neigungsverstellung wenigstens eines längen- und/oder neigungsverstellbaren Verstellelements eine Temperiereinheit zur Temperierung wenigstens eines temperierbaren Verstellelements vor. Dabei ist der ersten Antriebseinheit eine erste Steuer- und/oder Regeleinheit zuordenbar oder zugeordnet, mittels derer die Längen- und/oder Neigungsverstellung des wenigstens einen längen- und/oder neigungsverstellbaren Verstellelements relativ zu der Normalenrichtung steuerbar und/oder regelbar ist. Zudem ist der Temperiereinheit eine zweite Steuer- und/oder Regeleinheit zuordenbar oder zugeordnet, mittels derer eine Soll-Temperatur T_{S} des wenigstens einen temperierbaren Verstellelements steuerbar und/oder regelbar ist.

Eine weitere Ausführungsform des formflexiblen Einsatzes sieht vor, dass die erste Antriebseinheit wenigstens einen Antrieb aufweist. Dabei ist jeweils einer der Antriebe einem der längen- und/oder neigungsverstellbaren Verstellelemente zuordenbar oder zugeordnet. Als Antrieb kann ein Linearantrieb vorgesehen sein. Eingesetzt werden kann beispielsweise ein Kugelgewindetriebe, ein Rollengewindetriebe, ein Hydraulikzylinder, ein Pneumatikzylinder oder ein elektromechanischer Linearantrieb. Letzterer ist insbesondere ausgebildet als ein Linearmotor mit elektrodynamischem Wirkprinzip oder als ein Linearaktor mit piezoelektrischem, elektrostatischem, elektromagnetischem, magnetostriktivem oder thermoelektrischem Wirkprinzip.

Eine noch andere Ausführungsform des formflexiblen Einsatzes sieht vor, dass die Temperiereinheit wenigstens einen Temperatursensor aufweist. Dabei ist jeweils einer der Temperatursensoren einem der temperierbaren Verstellelemente zur Ermittlung einer Ist-Temperatur T_{I} zuordenbar oder zugeordnet. Unter Verwendung der zweiten Steuer- und/oder Regeleinheit erfolgt ein Vergleich der Ist-Temperatur T_{I} des jeweiligen temperierbaren Verstellelements mit der Soll-Temperatur T_{S} des jeweiligen temperierbaren Verstellelements. Je nach Ergebnis des Vergleichs erfolgt gegebenenfalls eine Korrektur der Ist-Temperatur T_{I}. Dadurch ist vorteilhafterweise eine für den jeweiligen Herstellungsprozess und/oder Verfahrensschritt vorgebbare Temperatur des wenigstens einen temperierbaren Verstellelements einstellbar.

Eine andere Ausführungsform des formflexiblen Einsatzes sieht vor, dass die Verstellelemente unabhängig voneinander einstückig oder mehrteilig ausgebildet sind. Dadurch wird der Spielraum für die Gestaltung eines für eine bestimmte Anwendung benötigten formflexiblen Einsatzes erweitert. Ein einstückig ausgebildetes Verstellelement ist besonders einfach und damit vergleichsweise kostengünstig herstellbar. Mit "mehrteilig" ist im Sinne der vorliegenden Erfindung eine wenigstens zweiteilige Ausgestaltung eines Verstellelements gemeint.

In einer weiteren Ausführungsform des formflexiblen Einsatzes ist wenigstens ein mehrteilig ausgebildetes Verstellelement vorgesehen, welches wenigstens zwei Segmente aufweist. Dabei sind die wenigstens zwei Segmente individuell
- relativ zu der Normalenrichtung reversibel neigungsverstellbar
   und/oder
- relativ zu der Normalenrichtung reversibel längenverstellbar.

Durch eine individuelle Neigungs- und/oder Längenverstellbarkeit einzelner Segmente eines Verstellelementes kann eine noch präzisere Konfiguration der Verstellelemente des formflexiblen Einsatzes erfolgen. Das kann insbesondere bei der Herstellung maßgeschneiderter Kleinserien oder Einzelstücke, z. B. individualisierte Massenprodukte wie Schuhinnensohlen, vorteilhaft sein.

In einer anderen Variante des formflexiblen Einsatzes sind jeweils zwei Segmente kraft-, form- und/oder reibschlüssig und/oder stoffschlüssig miteinander verbindbar. Es können zum Beispiel Schraub-, Steck- und/oder Klebe-, Schweiß- oder Lötverbindungen vorgesehen sein. Innerhalb eines Verstellelements mit mehr als zwei Segmenten können auch verschiedene Verbindungsarten zum Verbinden der Segmente vorgesehen sein. Beispielsweise kann ein teleskopartig längenverstellbares Verstellelement vorgesehen sein. Möglich ist auch das Vorsehen eines längen- und neigungsverstellbaren Verstellelements, welches wenigstens zwei teleskopartig ineinander geschobene Segmente aufweist und wenigstens zwei mittels einer Gelenkverbindung verbundene, gegeneinander verschwenkbare Segmente.

Eine andere Ausführungsform des formflexiblen Einsatzes ist dadurch gekennzeichnet, dass ein erstes, an der oberen Seite der Basis anordenbares Segment und ein zweites, an einem oberen Ende des ersten Segments anordenbares Segment des wenigstens einen mehrteilig ausgebildeten Verstellelements mittels einer antreibbaren Gelenkverbindung miteinander verbunden sind. Dabei ist vorgesehen, dass
- jeweils einer der Antriebe der ersten Antriebseinheit der antreibbaren Gelenkverbindung zuordenbar oder zugeordnet ist,
   und
- mittels der ersten Steuer- und/oder Regeleinheit eine Verschwenkung gelenkseitiger Enden des ersten und zweiten Segments gegeneinander und/oder eine Neigungsverstellung des ersten und/oder zweiten Segments relativ zu der Normalenrichtung steuerbar und/oder regelbar ist.

Dabei ist die Gelenkverbindung beispielsweise als Kugelgelenk, Eigelenk, Sattelgelenk, Scharniergelenk oder Zapfengelenk ausgebildet. Bevorzugt ist ein Kugelgelenk, ein Eigelenk oder ein Scharniergelenk vorgesehen. Das obere Ende des ersten, an der oberen Seite der Basis anordenbaren Segments des mehrteilig ausgebildeten Verstellelements kann eine Gelenkpfanne aufweisen. Das zweite, an dem oberen Ende des ersten Segments anordenbare Segment des Verstellelements weist dann ein unteres Ende auf, welches komplementär zu der Gelenkpfanne ausgebildet ist. Durch einen solchen Aufbau eines mehrteilig ausgebildeten Verstellelements sind wenigstens zwei der Segmente beziehungsweise deren gelenkseitige Enden gegeneinander verschwenkbar und/oder relativ zu der Normalenrichtung neigungsverstellbar.

Alternativ oder ergänzend kann vorgesehen sein, dass ein unteres Ende des ersten, an der oberen Seite der Basis anordenbaren Segments komplementär zu einer an einem oberen Ende eines Verbindungselements vorgesehenen Gelenkpfanne ausgebildet ist. Ein von der Gelenkpfanne abgewandtes Ende des Verbindungselements ist in einer an der oberen Seite der Basis vorgesehenen Ausnehmung kraft-, form- und/oder reibschlüssig und/oder stoffschlüssig anordenbar.

In einer anderen Variante des formflexiblen Einsatzes weist er ein Material auf, welches ausgewählt ist aus der Gruppe bestehend aus einem Metall, einer Legierung, einer Keramik und einem Polymer.

Der Begriff "Metall" umfasst gemäß der vorliegenden Erfindung Edel- und Nichtedelmetalle. Eine "Legierung" umfasst wenigstens zwei chemische Elemente, wobei wenigstens eines der Elemente ein Metall ist. Unter "Keramik" werden gemäß der hier beschriebenen Erfindung auch keramische Faserverbundwerkstoffe und auf Basis von Metalloxiden hergestellte Werkstoffe verstanden. Mit "Polymer" ist mit Bezug auf die vorliegende Erfindung z. B. Kautschuk natürlichen oder synthetischen Ursprungs und Silikon gemeint.

Die vorgenannten Materialien können in einzelnen Komponenten des formflexiblen Einsatzes vorgesehen sein, wobei auch einzelne Komponenten, wie z. B. die Basis, vollständig aus einem dieser Materialien gefertigt sein können. Des Weiteren kann der formflexible Einsatz ein Komposit aufweisen, welches eines oder mehrere der vorgenannten Materialien umfasst. Alternativ kann der formflexible Einsatz auch vollständig aus einem der vorgenannten Materialien gefertigt sein.

Als Materialen können vorgesehen sein: eine Eisen-Kohlenstoff-Legierung, d. h. ein Stahl, Aluminiumtrioxid (Al₂O₃), ein Zirkoniumdioxid-verstärktes Aluminiumoxid (engl. *Zirconia Toughened Aluminum Oxide,* ZTA), ein Siliciumcarbid, z. B. ein reaktionsgebundenes siliciuminfiltriertes Siliciumcarbid (SiSiC) oder ein drucklos gesintertes Siliciumcarbid (SSiC), oder ein polysiloxanbasiertes Komposit.

Die Basis des beanspruchten Einsatzes besteht bevorzugt aus einer Eisen-Kohlenstoff-Legierung, d. h. einem Stahl. Denn diese Gruppe von Materialien ist äußerst stabil und unter den vielfältigen Einsatzbedingungen vergleichsweise robust und mithin wenig wartungsanfällig.

Die wenigstens zwei Verstellelemente des hier beschriebenen formflexiblen Einsatzes weisen beispielsweise eine Eisen-Kohlenstoff-Legierung, d. h. einen Stahl, auf. Alternativ oder ergänzend kann jeweils wenigstens ein Polymer vorgesehen sein, insbesondere ein Elastomer. Zudem besteht die Möglichkeit - unter Berücksichtigung des herzustellenden Formteils und der gewünschten Formteileigenschaften -, innerhalb eines formflexiblen Einsatzes Verstellelemente aus unterschiedlichen Materialien oder Materialzusammensetzungen vorzusehen. Dadurch können bereits während des Herstellungsprozesses die - gegebenenfalls abschnittsweise oder punktuell unterschiedlichen - Eigenschaften des zu produzierenden Formteils, wie z. B. unterschiedliche Steifigkeiten, noch besser berücksichtigt werden. Zudem kann eine unerwünschte Beeinträchtigung des Formteils, insbesondere einer Formteiloberfläche, vermieden oder ausgeschlossen werden. Umfasst der formflexible Einsatz wenigstens ein mehrteilig ausgebildetes Verstellelement, welches zwei Segmente aufweist, können das erste und das zweite Segment unabhängig voneinander ein Material aufweisen, welches ausgewählt ist aus der Gruppe bestehend aus einem Metall, einer Legierung, einer Keramik und einem Polymer. Beispielsweise kann in dem ersten, unteren Segment ein Stahl vorgesehen sein, welcher vorteilhafterweise vergleichsweise robust und damit wenig wartungsanfällig ist. Das zweite, sich nach oben anschließende, Segment des Verstellelements kann ein - im Vergleich zu einem Stahl - weicheres Material umfassen, z. B. ein Polymer. Die Auswahl des vergleichsweise weicheren Materials erfolgt vorteilhafterweise unter Berücksichtigung des herzustellenden Formteils und dessen Eigenschaften, insbesondere des Formteilmaterials, welches unmittelbar in Kontakt mit einem oberen Ende des zweiten Segments des Verstellelements kommt. Durch das Vorsehen eines vergleichsweise weicheren Materials in dem oberen, zweiten Segment des mehrteilig ausgebildeten Verstellelements kann vorteilhafterweise vermieden oder ausgeschlossen werden, dass durch das obere Ende des zweiten Segments - gegebenenfalls irreversibel - unerwünschte Abdrücke und/oder Beschädigungen im Formteilmaterial entstehen. Zumindest kann in der Regel die Abdrucktiefe auf ein für das jeweils herzustellende Formteil tolerierbares Minimum reduziert werden.

In einer weiteren Ausführungsvariante des formflexiblen Einsatzes ist wenigstens ein Befestigungselement an einer unteren Seite der Basis der Verstelleinheit vorgesehen, mittels dessen der formflexible Einsatz in der Ausnehmung des jeweiligen formgebenden Werkzeugs lösbar fixierbar ist. Dabei ist das wenigstens eine Befestigungselement kraft-, form- und/oder reibschlüssig und/oder stoffschlüssig mit der unteren Seite der Basis der Verstelleinheit verbindbar. Das Befestigungselement kann z. B. als Befestigungsarm ausgebildet sein. Die lösbare Fixierung des formflexiblen Einsatzes in einer Ausnehmung des formgebenden Werkzeugs mittels des wenigstens einen Befestigungselements kann durch Form-, Kraft- und/oder Reibschluss erfolgen. Beispielsweise kann eine einfach und kostengünstig realisierbare Schraub- oder Steckverbindung vorgesehen sein.

Bei einer anderen Ausführungsform des formflexiblen Einsatzes ist jedes der Befestigungselemente relativ zu der Normalenrichtung individuell und reversibel längenverstellbar und/oder neigungsverstellbar. Dadurch werden die Möglichkeiten für die Positionierung und Ausrichtung des formflexiblen Einsatzes innerhalb der Ausnehmung des formgebenden Werkzeugs erweitert.

In einer noch anderen Ausführungsform des formflexiblen Einsatzes ist eine zweite Antriebseinheit zur Längen- und/oder Neigungsverstellung wenigstens eines längen- und/oder neigungsverstellbaren Befestigungselements vorgesehen. Die zweite Antriebseinheit weist wenigstens einen Antrieb auf, wobei jeweils einer der Antriebe einem der längen- und/oder neigungsverstellbaren Befestigungselemente zuordenbar oder zugeordnet ist. Mittels einer der zweiten Antriebseinheit zuordenbaren oder zugeordneten dritten Steuer- und/oder Regeleinheit ist die Längen- und/oder Neigungsverstellung des wenigstens einen längen- und/oder neigungsverstellbaren Befestigungselements relativ zu der Normalenrichtung steuerbar und/oder regelbar. Somit ist die Längen- und/oder Neigungsverstellung des wenigstens einen längen- und/oder neigungsverstellbaren Befestigungselements einfach und präzise zu bewerkstelligen.

Eine weitere Variante des formflexiblen Einsatzes ist dadurch gekennzeichnet, dass wenigstens eines der Befestigungselemente eine antreibbare Gelenkverbindung aufweist. Die antreibbare Gelenkverbindung umfasst ein erstes Gelenksegment und ein zweites Gelenksegment. Dabei ist vorgesehen, dass
- ein Antrieb der zweiten Antriebseinheit der antreibbaren Gelenkverbindung zuordenbar oder zugeordnet ist,
   und
- mittels der dritten Steuer- und/oder Regeleinheit eine Verschwenkung gelenkseitiger Enden des ersten und des zweiten Gelenksegments gegeneinander und/oder eine Neigungsverstellung des ersten und/oder zweiten Gelenksegments relativ zu der Normalenrichtung steuerbar und/oder regelbar ist.

Die Gelenkverbindung ist beispielsweise als Kugelgelenk, Eigelenk, Sattelgelenk, Scharniergelenk oder Zapfengelenk ausgebildet. Bevorzugt ist ein Kugelgelenk, ein Eigelenk oder ein Scharniergelenk vorgesehen.

Eine weitere Ausführungsform des formflexiblen Einsatzes sieht vor, dass jedes der Befestigungselemente an einem von der unteren Seite der Basis der Verstelleinheit abgewandten Endabschnitt wenigstens ein Befestigungsmittel aufweist. Der Endabschnitt des Befestigungselements und das wenigstens eine Befestigungsmittel sind kraft-, form- und/oder reibschlüssig und/oder stoffschlüssig miteinander verbindbar. Ist eine kraft-, form- und/oder reibschlüssige Verbindung vorgesehen, kann z. B. eine Steckverbindung gewählt werden, insbesondere wenn an dem Endabschnitt des Befestigungselements eine Ausnehmung vorgesehen ist. Dann kann das Befestigungsmittel bei Entnahme des formflexiblen Einsatzes und des damit verbundenen Befestigungselements in der Ausnehmung des formgebenden Werkzeugs verbleiben. In diesem Fall sind die Ausnehmung am Endabschnitt des Befestigungselements und ein oberer Endbereich des Befestigungsmittels vorzugsweise komplementär oder zumindest im Wesentlichen komplementär zueinander ausgebildet. Idealerweise ist das wenigstens eine Befestigungsmittel dann für das Anordnen eines anderen formflexiblen Einsatzes, umfassend wenigstens ein Befestigungselement, in der Ausnehmung des formgebenden Werkzeugs verwendbar. Alternativ oder ergänzend ist das wenigstens eine Befestigungsmittel mit der Ausnehmung des formgebenden Werkzeugs lösbar verbindbar. Im einfachsten Fall ist das wenigstens eine Befestigungsmittel insbesondere umfangseitig so ausgebildet, dass es kraft-, form- und/oder reibschlüssig in der Ausnehmung des formgebenden Werkzeugs anordenbar ist. Dann kann der formflexible Einsatz einfach und rasch - gemeinsam mit dem wenigstens einen Befestigungselement und dem wenigstens einen Befestigungsmittel - aus dem formgebenden Werkzeug entnommen werden, z. B. zu Reparatur- und/oder Austauschzwecken.

In einer anderen Ausführungsform des formflexiblen Einsatzes weist wenigstens eines der Befestigungselemente und/oder wenigstens eines der Befestigungsmittel ein Material auf, welches ausgewählt ist aus der Gruppe bestehend aus einem Metall, einer Legierung, einer Keramik und einem Polymer. Das Befestigungselement und das Befestigungsmittel bestehen bevorzugt aus einer Eisen-Kohlenstoff-Legierung, d. h. einem Stahl. Denn diese Gruppe von Materialien ist äußerst stabil und unter den vielfältigen Einsatzbedingungen vergleichsweise robust und mithin wenig wartungsanfällig.

In einer anderen Variante des formflexiblen Einsatzes ist wenigstens ein formflexibles Mittel vorgesehen, welches an einem oberen Endbereich wenigstens eines der Verstellelemente anordenbar oder angeordnet ist.

Vorteilhafterweise können die Eigenschaften des wenigstens einen formflexiblen Mittels an das jeweilige Herstellverfahren und das jeweils herzustellende Kunststoff enthaltende Formteil angepasst werden. Dies gilt insbesondere hinsichtlich seiner Elastizität, d. h. seiner Fähigkeit, eine durch äußere Einwirkung hervorgerufene Formänderung aus eigener Kraft wieder rückgängig zu machen, und hinsichtlich seiner Steifigkeit, insbesondere seiner Dehn- und Biegesteifigkeit, d. h. seines Widerstands gegen eine elastische Verformung durch eine Kraft oder ein Biegemoment. Weist das formflexible Mittel ein Polymer, eine Kunststofffaser oder eine Naturfaser auf oder ist es aus einem dieser Materialien oder einer Mischung dieser Materialien gefertigt, ist das formflexible Mittel in der Regel vorteilhafterweise reversibel verformbar, d. h. elastisch. Somit ist eine Oberfläche einer Oberseite des wenigstens einen formflexiblen Mittels besonders gut an eine Kontur einer Unterseite einer Schicht, z. B. eines Films, einer Folie oder Membran, anpassbar. Mithin ist eine lösbare Anordnung des wenigstens einen formflexiblen Mittels an der Unterseite der Schicht und/oder eine lösbare Verbindung zwischen dem wenigstens einen formflexiblen Mittel und der Unterseite der Schicht, welche z. B. als Bestandteil einer zu produzierenden mehrschichtigen Sohle vorgesehen sein kann, besonders einfach möglich. Damit ist vorteilhafterweise während eines Verfahrens zur Herstellung eines Kunststoff enthaltenden Formteils eine besonders stabile Anordnung der Schicht innerhalb des formgebenden Werkzeugs realisierbar.

In einer weiteren Ausführungsform des formflexiblen Einsatzes weist das wenigstens eine formflexible Mittel ein Material auf, welches ausgewählt ist aus der Gruppe bestehend aus einem Polymer, Kunstfasern und Naturfasern.

Der Begriff "Polymer" ist bereits weiter oben definiert worden. Der Begriff "Kunstfasern" umfasst sowohl zellulosische Chemiefasern, z. B. Viskose, Modal und Acetat, als auch synthetische Chemiefasern, z. B. Polyester, Polyamid und Polyacryl. Mit "Naturfasern" sind Fasern pflanzlichen Ursprungs gemeint, z. B. Hanf, Jute, Sisal, Leinen und Baumwolle, und Fasern tierischen Ursprungs, z. B. Schafswolle.

In einer weiteren Ausführungsform des formflexiblen Einsatzes ist das wenigstens eine formflexible Mittel insbesondere drehbar und/oder schwenkbar mit dem oberen Endbereich eines der Verstellelemente verbindbar. Eine Drehung des wenigstens einen formflexiblen Mittels um eine parallel zu der Normalenrichtung verlaufende Achse und/oder eine Verkippung relativ zu der Normalenrichtung ist insbesondere vorteilhaft, wenn ein Verfahren zur Herstellung eines Kunststoff enthaltenden Formteils das Anordnen einer Schicht, z. B. eines Films, einer Folie oder Membran, an den oberen Endbereichen der Verstellelemente, insbesondere an der Oberfläche der Oberseite des wenigstens einen formflexiblen Mittels, vorsieht. Dann kann sich das wenigstens eine formflexible Mittel einfach und rasch ohne weiteres Zutun an der Kontur der Unterseite der jeweiligen Schicht ausrichten und lösbar an der Unterseite der jeweiligen Schicht anordnen und/oder mit dieser verbinden.

In einer weiteren Ausführungsform des formflexiblen Einsatzes ist vorgesehen, dass das wenigstens eine formflexible Mittel als Membran oder als Folie ausgebildet ist oder mit einer Membran oder einer Folie versehen ist. In einer anderen Variante ist das wenigstens eine formflexible Mittel einlagig oder mehrlagig ausgebildet. Beispielsweise kann das formflexible Mittel zwei Lagen umfassen, wobei eine erste Lage ein erstes Material aufweist, eine zweite Lage ein zweites Material aufweist und das erste Material eine andere Elastizität und/oder Steifigkeit aufweist als das zweite Material. Auf diese Weise können formflexible Mittel zur Verfügung gestellt werden, deren Eigenschaften noch präziser auf das jeweilige Herstellungsverfahren und/oder das zu produzierende Werkstück abstimmbar sind.

In einer anderen Ausführungsvariante des formflexiblen Einsatzes ist das wenigstens eine formflexible Mittel kraft-, form- und/oder reibschlüssig und/oder stoffschlüssig mit dem oberen Endbereich wenigstens eines der Verstellelemente verbindbar. Dazu ist beispielsweise eine Schraub- oder Steckverbindung und/oder Kleb-, Schweiß- oder Lötverbindung vorsehbar. Eine weitere Variante des formflexiblen Einsatzes sieht wenigstens eine Vertiefung an einer Unterseite des wenigstens einen formflexiblen Mittels vor. Dabei ist in jede Vertiefung ein oberer Abschnitt des oberen Endbereichs wenigstens eines der Verstellelemente einbringbar. Im einfachsten Fall sind jeweils eine der Vertiefungen an der Unterseite des formflexiblen Mittels und der obere Abschnitt des oberen Endbereichs des wenigstens einen darin einbringbaren Verstellelements komplementär oder im Wesentlichen komplementär zueinander ausgebildet. Beispielsweise kann eine Steckverbindung vorgesehen sein, wobei wenigstens der obere Abschnitt des oberen Endbereichs des wenigstens einen einbringbaren Verstellelements stiftförmig, nadelförmig, dornförmig, keilförmig, konusförmig, quaderförmig oder plattenförmig ausgebildet sein kann oder ein derart ausgebildetes Element an dessen oberem Endbereich anordenbar ist.

Eine weitere Ausführungsform des formflexiblen Einsatzes ist dadurch gekennzeichnet, dass eine formflexible Schicht an den oberen Endbereichen der Verstellelemente anordenbar oder angeordnet ist. Dies kann dann vorteilhaft oder gewünscht sein, wenn z. B. ein Urformverfahren zur Herstellung einer mehrere Schichten umfassende Sohle für einen Schuh durchgeführt werden soll. Die formflexible Schicht kann beispielsweise als Membran oder als Folie ausgebildet sein oder mit einer Membran oder einer Folie versehen sein. Dabei ist die formflexible Schicht kraft-, form- und/oder reibschlüssig und/oder stoffschlüssig an den oberen Endbereichen der Verstellelemente anordenbar beziehungsweise mit den oberen Endbereichen der Verstellelemente verbindbar. Sie kann also als ein Bestandteil des formflexiblen Einsatzes vorgesehen sein. Insbesondere im Falle einer kraft-, form- und/oder reibschlüssigen Verbindung zwischen den oberen Endbereichen der Verstellelemente und der formflexiblen Schicht ist die formflexible Schicht bei Bedarf austauschbar, z. B. bei Verschleiß oder aufgrund einer Variation der angestrebten Eigenschaften des herzustellenden Formteils. Alternativ kann die formflexible Schicht als ein Bestandteil des herzustellenden Formteils vorgesehen sein. Dann ist nach dem Entformen des formstabilen Formteils aus dem formgebenden Werkzeug, umfassend einen hier beschriebenen formflexiblen Einsatz, und vor der Herstellung eines weiteren Formteils eine neue formflexible Schicht an den oberen Endbereichen der Verstellelemente anzuordnen.

Vorteilhafterweise können die Eigenschaften der formflexiblen Schicht an das jeweilige Herstellverfahren und das jeweilige herzustellende Formteil angepasst werden. Dies gilt insbesondere hinsichtlich ihrer Elastizität, d. h. ihrer Fähigkeit, eine durch äußere Einwirkung hervorgerufene Formänderung aus eigener Kraft wieder rückgängig zu machen, und hinsichtlich ihrer Steifigkeit, insbesondere ihrer Dehn- und Biegesteifigkeit, d. h. ihres Widerstands gegen eine elastische Verformung durch eine Kraft oder ein Biegemoment. Weist die formflexible Schicht ein Polymer, eine Kunststofffaser oder eine Naturfaser auf oder ist aus einem dieser Materialien oder einer Mischung dieser Materialien gefertigt, ist sie in der Regel vorteilhafterweise reversibel verformbar, d. h. elastisch. Somit ist eine Korrektur oder eine vorsichtige Annäherung der Konfiguration der Verstellelemente vorteilhafterweise auch nach Einbringung der formflexiblen Schicht in das formgebende Werkzeug und Anordnung an den oberen Endbereichen der Verstellelemente des formflexiblen Einsatzes möglich. Nach Durchführung eines Urformverfahrens kann die formflexible Schicht Bestandteil des hergestellten Formteils sein, wobei eine Oberfläche ihrer Unterseite eine Außenkontur des Formteils darstellt. Alternativ oder ergänzend ist die formflexible Schicht lösbar mit einer Oberfläche der Unterseite des Formteils verbunden. Dann erfolgt die Ablösung des formstabilen Kunststoff enthaltenden Formteils von der formflexiblen Schicht als erster Schritt des Entformens. Alternativ kann die formflexible Schicht nach dem Entformen von dem formstabilen Formteil gelöst, insbesondere abgezogen, werden.

In einer weiteren Ausführungsform des formflexiblen Einsatzes sind Vertiefungen an einer Unterseite der formflexiblen Schicht vorgesehen. In jede Vertiefung ist ein oberer Abschnitt des oberen Endbereichs wenigstens eines der Verstellelemente einbringbar. Dabei ist es besonders einfach und damit vorteilhaft, wenn jeweils eine der Vertiefungen an der Unterseite der formflexiblen Schicht und der obere Abschnitt des oberen Endbereichs wenigstens eines darin einbringbaren Verstellelements komplementär oder im Wesentlichen komplementär zueinander ausgebildet sind. Das Vorsehen von Vertiefungen an der Unterseite der formflexiblen Schicht ist insbesondere dann von Vorteil, wenn die formflexible Schicht als ein Bestandteil des formflexiblen Einsatzes vorgesehen ist und somit nach der Fertigung eines Kunststoff enthaltenden Formteils im formflexiblen Einsatz verbleibt. Denn auf diese Weise kann eine stabilere Verbindung zwischen formflexibler Schicht und den oberen Endbereichen der Verstellelemente erreicht werden, d. h. für einen besseren Halt der formflexiblen Schicht innerhalb des formflexiblen Einsatzes gesorgt werden. Dadurch wird die Robustheit des jeweiligen Formprozesses weiter verbessert.

In einer anderen Variante des formflexiblen Einsatzes sind die Vertiefungen an der Unterseite der formflexiblen Schicht in einem vordefinierbaren Abstand und/oder in einem vordefinierbaren Anordnungsmuster zueinander anordenbar oder angeordnet. Dabei ist das Anordnungsmuster der Vertiefungen ausgehend von dem Anordnungsmuster der unteren Endbereiche der wenigstens zwei Verstellelemente erhältlich, und zwar mittels einer Spiegelung an einer horizontalen oder vertikalen Achse. Mithin kann die formflexible Schicht optimal auf den formflexiblen Einsatz beziehungsweise das Anordnungsmuster der unteren Endbereiche der Verstellelemente abgestimmt werden. Dadurch ist eine besonders einfache und stabile Fixierung der formflexiblen Schicht innerhalb des formflexiblen Einsatzes realisierbar.

In einer weiteren Ausführungsform des formflexiblen Einsatzes weist die formflexible Schicht ein Material auf, welches ausgewählt ist aus der Gruppe bestehend aus einem Polymer, Kunstfasern und Naturfasern. Die Definitionen der Begriffe "Polymer", "Kunstfasern" und "Naturfasern" sind bereits weiter oben angegeben.

Eine noch andere Ausführungsform des formflexiblen Einsatzes sieht vor, dass die formflexible Schicht einlagig oder mehrlagig ausgebildet ist. Sie kann zum Beispiel zwei Lagen umfassen, wobei eine erste Lage ein erstes Material aufweist, eine zweite Lage ein zweites Material aufweist und das erste Material eine andere Elastizität und/oder Steifigkeit aufweist als das zweite Material. Auf diese Weise können formflexible Schichten zur Verfügung gestellt werden, deren Eigenschaften noch präziser auf das jeweilige Herstellungsverfahren und/oder das zu produzierende Formteil abstimmbar sind.

Die Funktionalität der Verstellelemente beziehungsweise die vor der Fertigung eines Formteils gegebenenfalls erforderliche Konfiguration der Verstellelemente ist auch bei Vorsehen einer formflexiblen Schicht und/oder wenigstens eines formflexiblen Mittels unverändert vorhanden beziehungsweise durchführbar.

Gelöst wird die Aufgabe außerdem durch ein formgebendes Werkzeug, insbesondere ein Gieß-, Spritzgieß-, Thermoform- oder Pressformwerkzeug. Das formgebende Werkzeug umfasst wenigstens eine Werkzeughälfte, welche eine Ausnehmung aufweist. Außerdem umfasst es wenigstens einen formflexiblen Einsatz nach einer der weiter oben beschriebenen Ausführungsformen, welcher in der Ausnehmung der Werkzeughälfte anordenbar oder angeordnet ist. Der formflexible Einsatz weist eine Verstelleinheit auf, welche eine Basis und wenigstens zwei Verstellelemente umfasst. Untere Endbereiche der Verstellelemente sind an einer oberen Seite der Basis in wenigstens einem vordefinierbaren Abstand zueinander anordenbar oder angeordnet. Im angeordneten Zustand verläuft eine Hauptachse jedes Verstellelements parallel zu einer Normalenrichtung der Basis. Zudem ist jedes Verstellelement individuell
i. relativ zu der Normalenrichtung reversibel längen- und neigungsverstellbar
   oder
ii. temperierbar und relativ zu der Normalenrichtung reversibel längenverstellbar und/oder reversibel neigungsverstellbar.

Bei der Ausnehmung der Werkzeughälfte des formgebenden Werkzeugs handelt es sich im Falle eines Gieß- oder Spritzgießwerkzeugs, welches üblicherweise zwei Werkzeughälften umfasst, um eine Kavität.

Die Hauptachse eines Verstellelements ist in der Regel identisch mit dessen Longitudinalachse. Durch die Verwendung eines hier beanspruchten formgebenden Werkzeugs, umfassend wenigstens einen formflexiblen Einsatz nach einer der weiter oben beschriebenen Ausführungsformen, ist in einem kontinuierlichen Prozess zur Herstellung von Kunststoff enthaltenden Formteilen eine Vielzahl von Formteilen mit unterschiedlichen Geometrien einfach, rasch, präzise, reproduzierbar und ökonomisch produzierbar. Das gilt sowohl für den Fall, dass unmittelbar aufeinanderfolgend Serien, auch Kleinserien, von Formteilen herzustellen sind, welche unterschiedliche Geometrien aufweisen, als auch im Falle der Produktion von Einzelstücken mit verschiedenen Geometrien. Denn die Verstellelemente des formflexiblen Einsatzes sind vorteilhafterweise - je nach Ausführungsform des formflexiblen Einsatzes - innerhalb des formgebenden Werkzeugs individuell und somit ortsaufgelöst
a) relativ zu der Normalenrichtung reversibel längen- und neigungsverstellbar
   oder
b) temperierbar und relativ zu der Normalenrichtung reversibel längenverstellbar
   oder
c) temperierbar und relativ zu der Normalenrichtung reversibel neigungsverstellbar
   oder
d) temperierbar und relativ zu der Normalenrichtung reversibel längen- und neigungsverstellbar.

Eine für das zu produzierende Kunststoff enthaltende Formteil maßgeschneiderte Konfiguration der Verstellelemente ist - nach Auswahl eines hinsichtlich Material, Dimensionierung, der geometrischen Grundform seiner Basis, z. B. viereckig, rund, oval, sowie der Anordnung der unteren Endbereiche der Verstellelemente zueinander geeigneten formflexiblen Einsatzes - anhand der Konstruktionsdaten des herzustellenden Formteils computergestützt durchführbar. Die Konfiguration der Verstellelemente ist ohne Entnahme und/oder Austauschen des formflexiblen Einsatzes aus dem formgebenden Werkzeug einfach, rasch und reproduzierbar möglich. Im Falle eines Urformverfahrens, insbesondere eines Gieß- oder Spritzgießverfahrens, bei welchem üblicherweise zwei Werkzeughälften vorgesehen sind, wird durch die Konfiguration der Verstellelemente innerhalb wenigstens einer der beiden Werkzeughälften eines formgebenden Werkzeugs die Negativform des herzustellenden Produkts erzeugt. Insbesondere ist vorgesehen, dass wenigstens die dem Angusspunkt beziehungsweise Anspritzpunkt gegenüberliegende Werkzeughälfte des formgebenden Werkzeugs, d. h. die auf der beweglichen Seite beziehungsweise der Auswerferseite angeordnete Werkzeughälfte, einen hier beschriebenen formflexiblen Einsatz umfasst. Im Unterschied dazu wird im Falle eines Umformverfahrens, insbesondere eines Thermoformverfahrens oder Pressformverfahrens, üblicherweise durch die Konfiguration der Verstellelemente innerhalb einer einzigen Werkzeughälfte eines formgebenden Werkzeugs die Innen- oder Außenkontur des zu produzierenden Formteils nachgebildet, in Abhängigkeit davon, ob eine Positiv- oder Negativformung vorgesehen ist. Beim Negativformen kann zusätzlich ein Oberstempel beziehungsweise Vorstreckstempel vorgesehen sein, welcher ebenfalls einen formflexiblen Einsatz nach einem der weiter oben beschriebenen Ausführungsbeispiele aufweisen kann.

Mithin kann bei Verwendung eines hier beanspruchten rekonfigurierbaren beziehungsweise formflexiblen formgebenden Werkzeugs vorteilhafterweise auf das zeit- und kostenintensive Austauschen formgebender Werkzeuge und/oder Wechseleinsätze verzichtet werden. Infolgedessen entfallen zum einen Beschaffung, Wartung und gegebenenfalls Reparatur einer Vielzahl formgebender Werkzeuge und/oder von Wechseleinsätzen. Zum anderen werden Unterbrechungen im Verfahrensablauf für den Austausch formgebender Werkzeuge und/oder von Wechseleinsätzen vermieden. Zudem führt die Verwendung eines hier beschriebenen formgebenden Werkzeugs, umfassend wenigstens einen formflexiblen Einsatz nach einer der weiter oben beschriebenen Ausführungsformen, zu einer starken Vereinfachung und damit gegebenenfalls auch geringeren Störanfälligkeit eines Verfahrens zur Herstellung Kunststoff enthaltender Formteile.

Insbesondere im Rahmen der heutzutage im Trend liegenden kundenspezifischen Massenproduktion führt die Verwendung eines hier beanspruchten formgebenden Werkzeugs, umfassend wenigstens einen formflexiblen Einsatz nach einer der weiter oben beschriebenen Ausführungsformen, zu einer Prozessvereinfachung sowie Zeit- und Kostenersparnis. Ausgehend von Konstruktionsdaten, welche für eine Standardversion eines herzustellenden Kunststoff enthaltenden Formteils vorliegen, z. B. eines Partikelschaumteils für einen Sportschuh oder einen Fahrradhelm, können kundenspezifische Anpassungen reproduzierbar, präzise, einfach, rasch und vergleichsweise kostengünstig vorgenommen werden. Dazu sind lediglich Konstruktionsdaten der vom Kunden gewünschten Abwandlung der Standardversion zu ermitteln und gegebenenfalls umzuwandeln. Anhand dieser Daten erfolgt eine maßgeschneiderte Konfiguration der Verstellelemente des jeweiligen formflexiblen Einsatzes.

Im Falle eines Urformverfahrens, insbesondere eines Gieß- oder Spritzgießverfahrens, bestehen Variationsmöglichkeiten hinsichtlich der Verfahrensführung insbesondere bezüglich:
A. Konfiguration der Verstellelemente, gegebenenfalls auch während des Prozesses zur Durchführung von Kompressions- und Dekompressionshüben, insbesondere zur aktiven lokalen, d. h. ortsaufgelösten, Beeinflussung der Schaumstruktur und anderer Formteileigenschaften, wie z. B. einer bereichsabhängig oder punktuell variierenden Formteilhärte
B. Füllvolumen der Ausnehmung beziehungsweise Kavität und infolgedessen Dosiervolumen, insbesondere bei Polyurethanschäumen (PUR-Schäumen), unter Berücksichtigung des Formteilvolumens und der gewünschten Formteilhärte
C. Zusammensetzung des zu plastifizierenden Materials, insbesondere bei PUR-Schäumen, unter Berücksichtigung des Formteilvolumens und der gewünschten Formteilhärte.

In einer Ausführungsform des formgebenden Werkzeugs ist vorgesehen, dass der wenigstens eine formflexible Einsatz kraft-, form- und/oder reibschlüssig und/oder stoffschlüssig in der Ausnehmung der wenigstens einen Werkzeughälfte anordenbar oder angeordnet ist. Insbesondere ist der formflexible Einsatz mit wenigstens einer Oberfläche der Ausnehmung der wenigstens einen Werkzeughälfte kraft-, form- und/oder reibschlüssig und/oder stoffschlüssig verbindbar. Im Falle einer kraft-, form- und/oder reibschlüssigen Anordnung des wenigstens einen formflexiblen Einsatzes in der Ausnehmung der wenigstens einen Werkzeughälfte ist der wenigstens eine formflexible Einsatz vollständig und unversehrt - einschließlich sämtlicher Antriebseinheiten - entnehmbar. Dies ist besonders vorteilhaft, weil durch die einfache und rasche Entnahme eine Wartung und/oder Reparatur des formflexiblen Einsatzes vergleichsweise zeit- und damit kostensparend möglich ist.

In einer Variante des formgebenden Werkzeugs umfasst es genau eine Werkzeughälfte, welche eine Ausnehmung aufweist. Zudem umfasst es genau einen formflexiblen Einsatz nach einer der weiter oben beschriebenen Ausführungsformen, welcher in der Ausnehmung der genau einen Werkzeughälfte anordenbar oder angeordnet ist. Ein solches formgebendes Werkzeug ist insbesondere als Thermoformwerkzeug oder als Pressformwerkzeug verwendbar. Die Kosten für diese Art eines rekonfigurierbaren beziehungsweise formflexiblen formgebenden Werkzeugs sind naturgemäß geringer als diejenigen für ein formflexibles Gieß- oder Spritzgießwerkzeug.

In einer weiteren Ausführungsform des formgebenden Werkzeugs umfasst es
- eine erste Werkzeughälfte, welche eine erste Ausnehmung aufweist,
- eine zweite Werkzeughälfte, welche eine zweite Ausnehmung aufweist,
- einen ersten formflexiblen Einsatz nach einer der weiter oben beschriebenen Ausführungsformen, welcher in der ersten Ausnehmung der ersten Werkzeughälfte anordenbar oder angeordnet ist,
   und
- einen zweiten formflexiblen Einsatz nach einer der weiter oben beschriebenen Ausführungsformen, welcher in der zweiten Ausnehmung der zweiten Werkzeughälfte anordenbar oder angeordnet ist.

Dabei sind die erste Ausnehmung der ersten Werkzeughälfte und die zweite Ausnehmung der zweiten Werkzeughälfte derart ausgebildet und zueinander anordenbar, dass in einem Betriebszustand des formgebenden Werkzeugs ein formgebender Hohlraum vorliegt. Ein solches formflexibles formgebendes Werkzeug ist für den Einsatz in Gieß- oder Spritzgießverfahren geeignet.

Insgesamt ermöglicht die Verwendung eines hier beschriebenen formgebenden Gieß- oder Spritzgießwerkzeugs umfassend wenigstens einen formflexiblen Einsatz nach einer der weiter oben beschriebenen Ausführungsformen vorteilhafterweise die einfache, rasche, präzise, reproduzierbare und ökonomische Herstellung Kunststoff enthaltender Formteile und Formen unterschiedlicher Geometrien in einem kontinuierlichen Verfahren, und zwar auch in Kleinserien- oder Einzelteilfertigung. Mithin werden die Vorteile hoher Individualisierbarkeit mit denjenigen einer kostengünstigen Serienfertigung kombiniert.

Weiterhin wird die Aufgabe gelöst durch die Verwendung eines formflexiblen Einsatzes gemäß einer der oben beschriebenen Ausführungsformen zur Herstellung eines wenigstens eine Werkzeughälfte umfassenden formgebenden Gieß- oder Spritzgießwerkzeugs. Dabei handelt es sich um ein Verfahren zur Herstellung eines wenigstens eine Werkzeughälfte umfassenden formgebenden Gieß- oder Spritzgießwerkzeugs unter Verwendung wenigstens eines formflexiblen Einsatzes gemäß einer der oben beschriebenen Ausführungsformen. Ein solches Verfahren umfasst die folgenden Schritte:
a) Vorsehen einer ersten Werkzeughälfte, welche eine erste Ausnehmung umfasst,
b) Einbringen eines ersten formflexiblen Einsatzes in die erste Ausnehmung der ersten Werkzeughälfte und
   - zur Herstellung eines zwei Werkzeughälften umfassenden formgebenden Werkzeugs -
c) Wiederholung der Schritte a) und b) zur Herstellung einer zweiten Werkzeughälfte umfassend eine zweite Ausnehmung und einen zweiten formflexiblen Einsatz.

Dabei sind die erste Ausnehmung der ersten Werkzeughälfte und die zweite Ausnehmung der zweiten Werkzeughälfte derart ausgebildet und zueinander anordenbar, dass in einem Betriebszustand des formgebenden Werkzeugs ein formgebender Hohlraum vorliegt.

Der formflexible Einsatz weist eine Verstelleinheit auf, welche eine Basis und wenigstens zwei Verstellelemente umfasst. Untere Endbereiche der Verstellelemente sind an einer oberen Seite der Basis in wenigstens einem vordefinierbaren Abstand zueinander anordenbar oder angeordnet. Im angeordneten Zustand verläuft eine Hauptachse jedes Verstellelements parallel zu einer Normalenrichtung der Basis. Zudem ist jedes Verstellelement individuell
i. relativ zu der Normalenrichtung reversibel längen- und neigungsverstellbar oder
ii. temperierbar
   und relativ zu der Normalenrichtung reversibel längenverstellbar und/oder reversibel neigungsverstellbar.

Die Hauptachse eines Verstellelements ist in der Regel identisch mit dessen Longitudinalachse.

Bei der Ausnehmung der Werkzeughälfte des formgebenden Werkzeugs handelt es sich im Falle eines Gieß- oder Spritzgießwerkzeugs, welches üblicherweise zwei Werkzeughälften umfasst, um eine Kavität.

In einer Ausführungsform der Verwendung eines formflexiblen Einsatzes gemäß einer der oben beschriebenen Ausführungsformen zur Herstellung eines wenigstens eine Werkzeughälfte umfassenden formgebenden Werkzeugs beziehungsweise des Verfahrens zur Herstellung eines wenigstens eine Werkzeughälfte umfassenden formgebenden Werkzeugs ist nach Schritt b) ein weiterer Schritt vorgesehen, welcher ein kraft-, form- und/oder reibschlüssiges und/oder stoffschlüssiges Anordnen des ersten formflexiblen Einsatzes in der ersten Ausnehmung der ersten Werkzeughälfte umfasst. Vorteilhafterweise kann der erste formflexible Einsatz hinsichtlich Dimensionierung und Material sowie der geometrischen Grundform seiner Basis, z. B. viereckig, rund, oval, an diverse Werkzeughälften, welche unterschiedlich ausgestaltet sind, individuell angepasst werden. Dabei erfolgt die Anpassung derart, dass der erste formflexible Einsatz - im Falle einer kraft-, form- und/oder reibschlüssigen Anordnung in der ersten Ausnehmung der ersten Werkzeughälfte - vollständig und unversehrt entnehmbar ist, und zwar einschließlich sämtlicher Antriebseinheiten. Dies ist besonders vorteilhaft, weil durch die einfache und rasche Entnahme eine Wartung und/oder Reparatur des formflexiblen Einsatzes vergleichsweise zeit- und damit kostensparend möglich ist.

Mittels der hier beanspruchten Verwendung eines formflexiblen Einsatzes gemäß einer der oben beschriebenen Ausführungsformen zur Herstellung eines wenigstens eine Werkzeughälfte umfassenden formgebenden Werkzeugs beziehungsweise mittels des Verfahrens zur Herstellung eines wenigstens eine Werkzeughälfte umfassenden formgebenden Werkzeugs sind rekonfigurierbare beziehungsweise formflexible formgebende Gieß- oder Spritzgießwerkzeuge einfach, rasch, präzise, reproduzierbar und vergleichsweise kostengünstig herstellbar.

Zudem wird die Aufgabe gelöst durch ein formgebendes Gieß- oder Spritzgießwerkzeug erhältlich oder erhalten nach einem Verfahren gemäß einem der oben beschriebenen Ausführungsbeispiele zur Herstellung eines wenigstens eine Werkzeughälfte umfassenden formgebenden Gieß- oder Spritzgießwerkzeugs.

Ein solches formgebendes Werkzeug zeichnet sich insbesondere dadurch aus, dass es einfach, präzise, reproduzierbar und vergleichsweise kostengünstig herstellbar ist.

Das formgebende Werkzeug, erhältlich oder erhalten nach einem Verfahren gemäß einem der oben beschriebenen Ausführungsbeispiele, umfasst wenigstens eine Werkzeughälfte, welche eine Ausnehmung aufweist. Außerdem umfasst es wenigstens einen formflexiblen Einsatz nach einer der weiter oben beschriebenen Ausführungsformen, welcher in der Ausnehmung der wenigstens einen Werkzeughälfte anordenbar oder angeordnet ist. Der formflexible Einsatz weist eine Verstelleinheit auf, welche eine Basis und wenigstens zwei Verstellelemente umfasst. Untere Endbereiche der Verstellelemente sind an einer oberen Seite der Basis in wenigstens einem vordefinierbaren Abstand zueinander anordenbar oder angeordnet. Im angeordneten Zustand verläuft eine Hauptachse jedes Verstellelements parallel zu einer Normalenrichtung der Basis. Zudem ist jedes Verstellelement individuell
i. relativ zu der Normalenrichtung reversibel längen- und neigungsverstellbar
   oder
ii. temperierbar
   und relativ zu der Normalenrichtung reversibel längenverstellbar und/oder reversibel neigungsverstellbar.

Bei der Ausnehmung der Werkzeughälfte des formgebenden Werkzeugs handelt es sich im Falle eines Gieß- oder Spritzgießwerkzeugs, welches üblicherweise zwei Werkzeughälften umfasst, um eine Kavität.

Die Hauptachse eines Verstellelements ist in der Regel identisch mit dessen Longitudinalachse.

Durch die Verwendung eines hier beanspruchten formgebenden Werkzeugs, umfassend wenigstens einen formflexiblen Einsatz nach einer der weiter oben beschriebenen Ausführungsformen, ist in einem kontinuierlichen Prozess zur Herstellung von Kunststoff enthaltenden Formteilen eine Vielzahl von Formteilen mit unterschiedlichen Geometrien einfach, rasch, präzise, reproduzierbar und ökonomisch produzierbar. Das gilt sowohl für den Fall, dass unmittelbar aufeinanderfolgend Serien, auch Kleinserien, von Formteilen herzustellen sind, welche unterschiedliche Geometrien aufweisen, als auch im Falle der Produktion von Einzelstücken mit verschiedenen Geometrien. Denn die Verstellelemente des formflexiblen Einsatzes sind vorteilhafterweise - je nach Ausführungsform des formflexiblen Einsatzes - innerhalb des formgebenden Werkzeugs individuell und somit ortsaufgelöst
a) relativ zu der Normalenrichtung reversibel längen- und neigungsverstellbar
   oder
b) temperierbar und relativ zu der Normalenrichtung reversibel längenverstellbar
   oder
c) temperierbar und relativ zu der Normalenrichtung reversibel neigungsverstellbar
   oder
d) temperierbar und relativ zu der Normalenrichtung reversibel längen- und neigungsverstellbar.

Eine für das zu produzierende Kunststoff enthaltende Formteil maßgeschneiderte Konfiguration der Verstellelemente ist - nach Auswahl eines hinsichtlich Material, Dimensionierung, der geometrischen Grundform seiner Basis, z. B. viereckig, rund, oval, sowie der Anordnung der unteren Endbereiche der Verstellelemente zueinander geeigneten formflexiblen Einsatzes - anhand der Konstruktionsdaten des herzustellenden Formteils computergestützt durchführbar. Die Konfiguration der Verstellelemente ist ohne Entnahme und/oder Austauschen des formflexiblen Einsatzes aus dem formgebenden Werkzeug einfach, rasch und reproduzierbar möglich. Im Falle eines Urformverfahrens, insbesondere eines Gieß- oder Spritzgießverfahrens, bei welchem üblicherweise zwei Werkzeughälften vorgesehen sind, wird durch die Konfiguration der Verstellelemente innerhalb wenigstens einer der beiden Werkzeughälften eines formgebenden Werkzeugs die Negativform des herzustellenden Produkts erzeugt. Insbesondere ist vorgesehen, dass wenigstens die dem Angusspunkt beziehungsweise Anspritzpunkt gegenüberliegende Werkzeughälfte des formgebenden Werkzeugs, d. h. die auf der beweglichen Seite beziehungsweise der Auswerferseite angeordnete Werkzeughälfte, einen hier beschriebenen formflexiblen Einsatz umfasst. Im Unterschied dazu wird im Falle eines Umformverfahrens, insbesondere eines Thermoformverfahrens oder Pressformverfahrens, üblicherweise durch die Konfiguration der Verstellelemente innerhalb einer einzigen Werkzeughälfte eines formgebenden Werkzeugs die Innen- oder Außenkontur des zu produzierenden Formteils nachgebildet, in Abhängigkeit davon, ob eine Positiv- oder Negativformung vorgesehen ist. Beim Negativformen kann zusätzlich ein Oberstempel beziehungsweise Vorstreckstempel vorgesehen sein, welcher ebenfalls einen formflexiblen Einsatz nach einem der weiter oben beschriebenen Ausführungsbeispiele aufweisen kann.

Mithin kann bei Verwendung eines hier beanspruchten rekonfigurierbaren beziehungsweise formflexiblen formgebenden Werkzeugs vorteilhafterweise auf das zeit- und kostenintensive Austauschen formgebender Werkzeuge und/oder Wechseleinsätze verzichtet werden. Infolgedessen entfallen zum einen Beschaffung, Wartung und gegebenenfalls Reparatur einer Vielzahl formgebender Werkzeuge und/oder von Wechseleinsätzen. Zum anderen werden Unterbrechungen im Verfahrensablauf für den Austausch formgebender Werkzeuge und/oder von Wechseleinsätzen vermieden. Zudem führt die Verwendung eines hier beschriebenen formgebenden Werkzeugs, umfassend wenigstens einen formflexiblen Einsatz nach einer der weiter oben beschriebenen Ausführungsformen, zu einer starken Vereinfachung und damit gegebenenfalls auch geringeren Störanfälligkeit eines Verfahrens zur Herstellung Kunststoff enthaltender Formteile.

Insbesondere im Rahmen der heutzutage im Trend liegenden kundenspezifischen Massenproduktion führt die Verwendung eines hier beanspruchten formgebenden Werkzeugs, umfassend wenigstens einen formflexiblen Einsatz nach einer der weiter oben beschriebenen Ausführungsformen, zu einer Prozessvereinfachung sowie Zeit- und Kostenersparnis. Ausgehend von Konstruktionsdaten, welche für eine Standardversion eines herzustellenden Kunststoff enthaltenden Formteils vorliegen, z. B. eines Partikelschaumteils für einen Sportschuh oder einen Fahrradhelm, können kundenspezifische Anpassungen reproduzierbar, präzise, einfach, rasch und vergleichsweise kostengünstig vorgenommen werden. Dazu sind lediglich Konstruktionsdaten der vom Kunden gewünschten Abwandlung der Standardversion zu ermitteln und gegebenenfalls umzuwandeln. Anhand dieser Daten erfolgt eine maßgeschneiderte Konfiguration der Verstellelemente des jeweiligen formflexiblen Einsatzes.

Im Falle eines Urformverfahrens, insbesondere eines Gieß- oder Spritzgießverfahrens, bestehen Variationsmöglichkeiten hinsichtlich der Verfahrensführung insbesondere bezüglich:
A. Konfiguration der Verstellelemente, gegebenenfalls auch während des Prozesses zur Durchführung von Kompressions- und Dekompressionshüben, insbesondere zur aktiven lokalen, d. h. ortsaufgelösten, Beeinflussung der Schaumstruktur und anderer Formteileigenschaften, wie z. B. einer bereichsabhängig oder punktuell variierenden Formteilhärte
B. Füllvolumen der Ausnehmung beziehungsweise Kavität und infolgedessen Dosiervolumen, insbesondere bei Polyurethanschäumen (PUR-Schäumen), unter Berücksichtigung des Formteilvolumens und der gewünschten Formteilhärte
C. Zusammensetzung des zu plastifizierenden Materials, insbesondere bei PUR-Schäumen, unter Berücksichtigung des Formteilvolumens und der gewünschten Formteilhärte.

In einer Variante des formgebenden Werkzeugs, erhältlich oder erhalten nach einem Verfahren gemäß einem der oben beschriebenen Ausführungsbeispiele, umfasst es genau eine Werkzeughälfte, welche eine Ausnehmung aufweist. Zudem umfasst es genau einen formflexiblen Einsatz nach einer der weiter oben beschriebenen Ausführungsformen, welcher in der Ausnehmung der genau einen Werkzeughälfte anordenbar oder angeordnet ist. Ein solches formgebendes Werkzeug ist insbesondere als Thermoformwerkzeug oder als Pressformwerkzeug verwendbar. Die Kosten für diese Art eines rekonfigurierbaren beziehungsweise formflexiblen formgebenden Werkzeugs sind naturgemäß geringer als diejenigen für ein formflexibles Gieß- oder Spritzgießwerkzeug.

In einer weiteren Ausführungsform des formgebenden Werkzeugs, erhältlich oder erhalten nach einem Verfahren gemäß einem der oben beschriebenen Ausführungsbeispiele, umfasst es
- eine erste Werkzeughälfte, welche eine erste Ausnehmung aufweist,
- eine zweite Werkzeughälfte, welche eine zweite Ausnehmung aufweist,
- einen ersten formflexiblen Einsatz nach einer der weiter oben beschriebenen Ausführungsformen, welcher in der ersten Ausnehmung der ersten Werkzeughälfte anordenbar oder angeordnet ist,
   und
- einen zweiten formflexiblen Einsatz nach einer der weiter oben beschriebenen Ausführungsformen, welcher in der zweiten Ausnehmung der zweiten Werkzeughälfte anordenbar oder angeordnet ist.

Dabei sind die erste Ausnehmung der ersten Werkzeughälfte und die zweite Ausnehmung der zweiten Werkzeughälfte derart ausgebildet und zueinander anordenbar, dass in einem Betriebszustand des formgebenden Werkzeugs ein formgebender Hohlraum vorliegt. Ein solches formflexibles formgebendes Werkzeug ist für den Einsatz in Gieß- oder Spritzgießverfahren geeignet.

In einer anderen Ausführungsform des formgebenden Werkzeugs, erhältlich oder erhalten nach einem Verfahren gemäß einem der oben beschriebenen Ausführungsbeispiele, ist vorgesehen, dass der wenigstens eine formflexible Einsatz kraft-, form- und/oder reibschlüssig und/oder stoffschlüssig in der Ausnehmung der wenigstens einen Werkzeughälfte anordenbar oder angeordnet ist. Insbesondere ist der wenigstens eine formflexible Einsatz mit wenigstens einer Oberfläche der Ausnehmung der wenigstens einen Werkzeughälfte kraft-, form- und/oder reibschlüssig und/oder stoffschlüssig verbindbar. Der wenigstens eine formflexible Einsatz ist hinsichtlich Dimensionierung und Material sowie der geometrischen Grundform seiner Basis, z. B. viereckig, rund, oval, an die jeweilige Ausgestaltung der wenigstens einen Werkzeughälfte individuell angepasst. Dadurch ist der wenigstens eine formflexible Einsatz - im Falle einer kraft-, form- und/oder reibschlüssigen Anordnung in der Ausnehmung der wenigstens einen Werkzeughälfte - vollständig und unversehrt entnehmbar, und zwar einschließlich sämtlicher Antriebseinheiten. Dies ist besonders vorteilhaft, weil durch die einfache und rasche Entnahme eine Wartung und/oder Reparatur des formflexiblen Einsatzes vergleichsweise zeit- und damit kostensparend möglich ist.

Die Aufgabe wird zudem gelöst durch die Verwendung wenigstens eines formflexiblen Einsatzes gemäß einer der oben beschriebenen Ausführungsformen zur Herstellung eines Kunststoff enthaltenden Formteils. Dabei handelt es sich um zwei unterschiedliche Verfahren zur Herstellung eines Kunststoff enthaltenden Formteils unter Verwendung wenigstens eines formflexiblen Einsatzes gemäß einer der oben beschriebenen Ausführungsformen.

Zum einen handelt es sich bei der Verwendung wenigstens eines formflexiblen Einsatzes gemäß einer der oben beschriebenen Ausführungsformen zur Herstellung eines Kunststoff enthaltenden Formteils um ein Verfahren, insbesondere ein Urformverfahren, zur Herstellung eines Kunststoff enthaltenden Formteils unter Verwendung wenigstens eines formflexiblen Einsatzes gemäß einer der oben beschriebenen Ausführungsformen. Das Verfahren umfasst die folgenden Schritte:
a) Zurverfügungstellen und/oder Umwandeln von Konstruktionsdaten des herzustellenden Kunststoff enthaltenden Formteils,
b) Vorsehen einer Maschine umfassend
   i. eine Plastifizier- und Dosiereinheit,
      und
   ii. eine Schließeinheit
      umfassend ein formgebendes Werkzeug, insbesondere ein Gieß- oder Spritzgießwerkzeug,
      wobei das formgebende Werkzeug wenigstens eine Werkzeughälfte umfasst, welche eine Ausnehmung aufweist,
      wobei
         - der wenigstens eine formflexible Einsatz in der Ausnehmung anordenbar oder angeordnet ist,
         - eine erste Konfiguration von Verstellelementen des wenigstens einen formflexiblen Einsatzes vorgesehen ist,
            wobei mittels der ersten Konfiguration der Verstellelemente innerhalb der wenigstens einen Werkzeughälfte eine Negativform F1 oder eine erste Hälfte einer Negativform G1 einer Standardvariante des Kunststoff enthaltenden Formteils zur Verfügung gestellt wird,
c) Vorsehen einer Verfahrenssteuerung umfassend
   - eine Rechnereinheit
      und
   - eine Schnittstelle zur Kommunikation mit der das formgebende Werkzeug umfassenden Maschine,
d) Zuführen der zur Verfügung gestellten und/oder umgewandelten Konstruktionsdaten aus Schritt a), an
   - wenigstens eine Steuer- und/oder Regeleinheit der Plastifizier- und Dosiereinheit zur Regelung eines Dosiervolumens und/oder einer Zusammensetzung wenigstens eines zu plastifizierenden Kunststoffs,
      und
   - wenigstens eine Steuer- und/oder Regeleinheit des wenigstens einen formflexiblen Einsatzes zum Einstellen einer zweiten Konfiguration der Verstellelemente des wenigstens formflexiblen Einsatzes, welche sich von der ersten Konfiguration der Verstellelemente aus Schritt b) unterscheidet,
      wobei mittels der zweiten Konfiguration der Verstellelemente innerhalb der wenigstens einen Werkzeughälfte eine Negativform F2 oder eine erste Hälfte einer Negativform G2 des Kunststoff enthaltenden Formteils zur Verfügung gestellt wird,
      und
e) Durchführen des Verfahrens, insbesondere eines Gieß- oder Spritzgießverfahrens.

Bei der Ausnehmung der Werkzeughälfte des formgebenden Werkzeugs, insbesondere eines Gieß- oder Spritzgießwerkzeugs, welches üblicherweise zwei Werkzeughälften umfasst, handelt es sich um eine Kavität.

Zum anderen handelt es sich bei der Verwendung wenigstens eines formflexiblen Einsatzes gemäß einer der oben beschriebenen Ausführungsformen zur Herstellung eines Kunststoff enthaltenden Formteils um ein Verfahren, insbesondere ein Umformverfahren, zur Herstellung eines Kunststoff enthaltenden Formteils unter Verwendung wenigstens eines formflexiblen Einsatzes gemäß einer der oben beschriebenen Ausführungsformen. Ein solches Verfahren umfasst die folgenden Schritte:
a) Zurverfügungstellen und/oder Umwandeln von Konstruktionsdaten des Kunststoff enthaltenden Formteils,
b) Zurverfügungstellen eines umzuformenden Halbzeugs,
c) Vorsehen einer Maschine, umfassend eine Formeinheit, welche ein formgebendes Werkzeug, insbesondere ein Thermoform- oder Pressformwerkzeug, aufweist,
   wobei das formgebende Werkzeug genau eine Werkzeughälfte umfasst, welche eine Ausnehmung aufweist,
   wobei
      - der wenigstens eine formflexible Einsatz in der Ausnehmung anordenbar oder angeordnet ist,
      - eine erste Konfiguration von Verstellelementen des wenigstens einen formflexiblen Einsatzes vorgesehen ist,
   wobei mittels der ersten Konfiguration der Verstellelemente innerhalb der genau einen Werkzeughälfte eine Innenkontur K_{I} 1 oder eine Außenkontur K_{A} 1 einer Standardvariante des Kunststoff enthaltenden Formteils zur Verfügung gestellt wird,
d) Vorsehen einer Verfahrenssteuerung umfassend
   - eine Rechnereinheit
      und
   - eine Schnittstelle zur Kommunikation mit der das formgebende Werkzeug umfassenden Maschine,
e) Zuführen der zur Verfügung gestellten und/oder umgewandelten Konstruktionsdaten aus Schritt a) an
   - wenigstens eine Steuer- und/oder Regeleinheit zur Regelung einer Umformtemperatur T_{U} in einem elastoplastischen Bereich des umzuformenden Halbzeugs,
      und
   - wenigstens eine Steuer- und/oder Regeleinheit des wenigstens einen formflexiblen Einsatzes zum Einstellen einer zweiten Konfiguration der Verstellelemente des wenigstens einen formflexiblen Einsatzes,
      welche sich von der ersten Konfiguration der Verstellelemente aus Schritt c) unterscheidet,
      wobei mittels der zweiten Konfiguration der Verstellelemente innerhalb der genau einen Werkzeughälfte eine Innenkontur K_{I} 2 oder eine Außenkontur K_{A} 2 des Kunststoff enthaltenden Formteils zur Verfügung gestellt wird,
         und
f) Durchführen des Verfahrens, insbesondere eines Thermoform- oder Pressformverfahrens.

Der formflexible Einsatz weist eine Verstelleinheit auf, welche eine Basis und wenigstens zwei Verstellelemente umfasst. Untere Endbereiche der Verstellelemente sind an einer oberen Seite der Basis in wenigstens einem vordefinierbaren Abstand zueinander anordenbar oder angeordnet. Im angeordneten Zustand verläuft eine Hauptachse jedes Verstellelements parallel zu einer Normalenrichtung der Basis. Zudem ist jedes Verstellelement individuell
i. relativ zu der Normalenrichtung reversibel längen- und neigungsverstellbar
   oder
ii. temperierbar
   und relativ zu der Normalenrichtung reversibel längenverstellbar und/oder reversibel neigungsverstellbar.

Die Hauptachse eines Verstellelements ist in der Regel identisch mit dessen Longitudinalachse.

Bei der Ausnehmung handelt es sich insbesondere um eine Trägerplatte, welche beispielsweise einen Unter- und einen Oberspannrahmen sowie einen Vakuumanschluss aufweisen kann.

Durch die Verwendung eines formflexiblen Einsatzes nach einer der oben beschriebenen Ausführungsformen ist mittels der beiden hier beanspruchten Verfahren eine Vielzahl von Kunststoff enthaltenden Formteilen mit unterschiedlichen Geometrien einfach, rasch, präzise, reproduzierbar und ökonomisch produzierbar, wobei das jeweilige Verfahren kontinuierlich geführt werden kann. Das gilt sowohl für den Fall, dass unmittelbar aufeinanderfolgend Serien, auch Kleinserien, von Formteilen herzustellen sind, welche unterschiedliche Geometrien aufweisen, als auch im Falle der Produktion von Einzelstücken mit verschiedenen Geometrien. Denn die Verstellelemente des formflexiblen Einsatzes sind vorteilhafterweise - je nach Ausführungsform des formflexiblen Einsatzes - innerhalb des formgebenden Werkzeugs individuell und somit ortsaufgelöst
a) relativ zu der Normalenrichtung reversibel längen- und neigungsverstellbar
   oder
b) temperierbar und relativ zu der Normalenrichtung reversibel längenverstellbar
   oder
c) temperierbar und relativ zu der Normalenrichtung reversibel neigungsverstellbar
   oder
d) temperierbar und relativ zu der Normalenrichtung reversibel längen- und neigungsverstellbar.

Eine für das zu produzierende Kunststoff enthaltende Formteil maßgeschneiderte Konfiguration der Verstellelemente ist - nach Auswahl eines hinsichtlich Material, Dimensionierung, der geometrischen Grundform seiner Basis, z. B. viereckig, rund, oval, sowie der Anordnung der unteren Endbereiche der Verstellelemente zueinander geeigneten formflexiblen Einsatzes - anhand der Konstruktionsdaten des herzustellenden Formteils computergestützt durchführbar. Die Konfiguration der Verstellelemente ist ohne Entnahme und/oder Austauschen des formflexiblen Einsatzes aus dem formgebenden Werkzeug einfach, rasch und reproduzierbar möglich.

Im Falle des hier beanspruchten Urformverfahrens, insbesondere eines Gieß- oder Spritzgießverfahrens, bei welchem üblicherweise zwei Werkzeughälften vorgesehen sind, wird durch die Konfiguration der Verstellelemente innerhalb wenigstens einer der beiden Werkzeughälften eines formgebenden Werkzeugs die Negativform des herzustellenden Produkts erzeugt.

Mithin wird bei der hier beanspruchten Verwendung wenigstens eines formflexiblen Einsatzes gemäß einer der oben beschriebenen Ausführungsformen beziehungsweise bei den beiden beanspruchten Verfahren zur Herstellung eines Kunststoff enthaltenden Formteils unter Verwendung wenigstens eines formflexiblen Einsatzes gemäß einer der oben beschriebenen Ausführungsformen vorteilhafterweise auf das zeit- und kostenintensive Austauschen formgebender Werkzeuge und/oder Wechseleinsätze verzichtet. Infolgedessen entfallen zum einen Beschaffung, Wartung und gegebenenfalls Reparatur einer Vielzahl formgebender Werkzeuge und/oder von Wechseleinsätzen. Zum anderen werden Unterbrechungen im Verfahrensablauf für den Austausch formgebender Werkzeuge und/oder von Wechseleinsätzen vermieden. Zudem führt die Verwendung eines formflexiblen Einsatzes nach einem der oben beschriebenen Ausführungsbeispiele zu einer starken Vereinfachung und damit gegebenenfalls auch geringeren Störanfälligkeit der beiden hier beschriebenen Verfahren zur Herstellung eines Kunststoff enthaltenden Formteils.

Insbesondere im Rahmen der heutzutage im Trend liegenden kundenspezifischen Massenproduktion führt die Verwendung eines formflexiblen Einsatzes nach einer der oben beschriebenen Ausführungsformen zu einer vereinfachten und damit ökonomischeren Verfahrensführung. Ausgehend von Konstruktionsdaten, welche für eine Standardversion eines herzustellenden Kunststoff enthaltenden Formteils vorliegen, können kundenspezifische Anpassungen reproduzierbar, präzise, einfach, rasch und vergleichsweise kostengünstig vorgenommen werden. Dazu sind lediglich Konstruktionsdaten der vom Kunden gewünschten Abwandlung der Standardversion zu ermitteln und gegebenenfalls umzuwandeln. Anhand dieser Daten erfolgt eine maßgeschneiderte Konfiguration der Verstellelemente des jeweiligen formflexiblen Einsatzes.

Die Konstruktionsdaten sind, sofern nicht bereits vorhanden, mittels verschiedener Konstruktionsarten ermittelbar, nämlich mittels einer Anpassungskonstruktion, einer Variantenkonstruktion oder einer Neukonstruktion. Mit "Anpassungskonstruktion" ist die Änderung bereits bestehender Konstruktionen gemeint, welche beispielsweise zwecks Beseitigung von Mängeln oder Berücksichtigung neuer Sicherheits- und Umweltbestimmungen erfolgt. Das Grundkonzept wird beibehalten, und das jeweilige Formteil an geänderte Anforderungen angepasst. Bei der "Variantenkonstruktion" wird das Lösungskonzept einer bestehenden Konstruktion übernommen. Es werden lediglich Maße - ganz oder teilweise - geändert, Details weggelassen oder ergänzt. Mittels dieser Konstruktionsart können Teilefamilien aufgebaut werden. Durch das bloße Variieren der zur Verfügung stehenden Parameter lassen sich unterschiedliche Formteile erstellen. Unter "Neukonstruktion" wird die Konstruktion "neuer" Formteile verstanden, ohne dass auf vorhandene Formteile zurückgegriffen wird.

Üblicherweise wird für das Zurverfügungstellen und/oder Umwandeln der formspezifischen Konstruktionsdaten als Anwendungssoftware eine CAD-Konstruktionssoftware eingesetzt (CAD von engl. *Computer-Aided Design:* rechnerunterstütztes Konstruieren).

Im Falle eines Urformverfahrens, insbesondere eines Gieß- oder Spritzgießverfahrens, bestehen Variationsmöglichkeiten hinsichtlich der Verfahrensführung insbesondere bezüglich:
A. Konfiguration der Verstellelemente, gegebenenfalls auch während des Prozesses zur Durchführung von Kompressions- und Dekompressionshüben, insbesondere zur aktiven lokalen, d. h. ortsaufgelösten, Beeinflussung der Schaumstruktur und anderer Formteileigenschaften, wie z. B. einer bereichsabhängig oder punktuell variierenden Formteilhärte
B. Füllvolumen der Ausnehmung beziehungsweise Kavität und infolgedessen Dosiervolumen, insbesondere bei Polyurethanschäumen (PUR-Schäumen), unter Berücksichtigung des Formteilvolumens und der gewünschten Formteilhärte
C. Zusammensetzung des zu plastifizierenden Materials, insbesondere bei PUR-Schäumen, unter Berücksichtigung des Formteilvolumens und der gewünschten Formteilhärte.

In einer Ausführungsform des hier beanspruchten Urformverfahrens zur Herstellung eines Kunststoff enthaltenden Formteils umfasst das formgebende Werkzeug
- eine erste Werkzeughälfte, welche eine erste Ausnehmung aufweist,
- eine zweite Werkzeughälfte, welche eine zweite Ausnehmung aufweist,
- einen ersten formflexiblen Einsatz nach einer der weiter oben beschriebenen Ausführungsformen, welcher in der ersten Ausnehmung der ersten Werkzeughälfte anordenbar oder angeordnet ist,
   und
- einen zweiten formflexiblen Einsatz nach einer der weiter oben beschriebenen Ausführungsformen, welcher in der zweiten Ausnehmung der zweiten Werkzeughälfte anordenbar oder angeordnet ist.

Dabei sind die erste Ausnehmung der ersten Werkzeughälfte und die zweite Ausnehmung der zweiten Werkzeughälfte derart ausgebildet und zueinander anordenbar, dass in einem Betriebszustand des formgebenden Werkzeugs ein formgebender Hohlraum vorliegt.

Eine andere Ausführungsform des beanspruchten Urformverfahrens sieht vor, dass es sich um ein Thermoplastspritzgießverfahren oder ein Duroplastspritzgießverfahren handelt.

In einer weiteren Ausführungsform des beanspruchten Urformverfahrens oder des Umformverfahrens zur Herstellung eines Kunststoff enthaltenden Formteils ist vorgesehen, dass die Konstruktionsdaten unter Verwendung eines Flächen-, Volumen- oder Körpermodells zur Verfügung gestellt werden. Dies betrifft insbesondere ein Material, eine Steifigkeit, eine Elastizität und/oder eine Härte des herzustellenden Kunststoff enthaltenden Formteils.

Wird für das hier beschriebene Urformverfahren oder Umformverfahren ein weiter oben beschriebener formflexibler Einsatz verwendet, bei welchem an den oberen Endbereichen der wenigstens zwei Verstellelemente weder ein formflexibles Mittel noch eine formflexible Schicht angeordnet ist, kann Schritt b) des oben beschriebenen Urformverfahrens beziehungsweise Schritt c) des oben beschriebenen Umformverfahrens das Anordnen wenigstens eines formflexiblen Mittels und/oder einer formflexiblen Schicht an den oberen Endbereichen der Verstellelemente umfassen. Dies ist insbesondere dann der Fall, wenn das wenigstens eine formflexible Mittel und/oder die formflexible Schicht als Bestandteil des herzustellenden Kunststoff enthaltenden Formteils vorgesehen sind. Das wenigstens eine formflexible Mittel und die formflexible Schicht weisen jeweils ein Material auf, welches ausgewählt ist aus der Gruppe bestehend aus einem Polymer, Kunstfasern und Naturfasern. Die Begriffe "Polymer", "Kunstfasern" und "Naturfasern" sind bereits weiter oben definiert.

Insgesamt ist das hier beschriebene Urformverfahren für die einfache, rasche, präzise, reproduzierbare und ökonomische Herstellung Kunststoff enthaltender Formteile und Formen unterschiedlicher Geometrien in einem kontinuierlich geführten Prozess, auch in Kleinserien- oder Einzelteilfertigung, geeignet. Es sind auch Formteile herstellbar, welche auf anderem Wege, z. B. mittels Fräsen, nicht zugänglich sind. Vorteilhaft ist insbesondere die Möglichkeit einer individuellen Anpassung an Kundenwünsche und die Option der lokalen, d. h. ortsaufgelösten, Eigenschaftsgradierung. Dadurch können mit einer vergleichsweise hohen Präzision individualisierte, qualitativ hochwertige Produkte, insbesondere hinsichtlich Formgenauigkeit und Oberflächenstruktur, zur Verfügung gestellt werden. Eine mechanische Nachbearbeitung, z. B. durch Fräsen, ist vorteilhafterweise unnötig. Weiterhin vorteilhaft ist die Verkürzung der Rüstzeit verglichen mit Verfahren, bei denen das formgebende Werkzeug und/oder der formgebende Wechseleinsatz auszutauschen sind. Einen weiteren Vorteil stellt die Verkürzung der Entwicklungszeiten (engl. *time to market*) dar, zumal eine Änderung der Geometrie eines Standardprodukts innerhalb eines kontinuierlichen Fertigungsprozesses, d. h. auch während der Herstellung einer Produktserie, möglich ist, falls erforderlich sogar von Formteil zu Formteil. Mithin werden die Vorteile hoher Individualisierbarkeit mit denjenigen einer kostengünstigen Serienfertigung kombiniert.

Für das hier nicht beanspruchte Umformverfahren ergeben sich - infolge der Verwendung eines formflexiblen Einsatzes gemäß einer der oben beschriebenen Ausführungsformen - im Wesentlichen dieselben Vorteile wie für das hier beschriebene Urformverfahren. Insbesondere ermöglicht das hier beschriebene Umformverfahren zur Herstellung eines Kunststoff enthaltenden Formteils einfach, rasch, präzise, reproduzierbar und vergleichsweise kostengünstig eine kundenspezifische Anpassung, und zwar ausgehend von Konstruktionsdaten, welche für eine Standardversion eines Formteils vorliegen. Die Anpassung erfolgt durch Ermitteln und gegebenenfalls Umwandeln der Konstruktionsdaten der vom Kunden gewünschten Abwandlung einer Standardversion eines Formteils und die Verwendung dieser Daten gemäß Schritt e) des hier beanspruchten Verfahrens. Es werden die Vorteile hoher Individualisierbarkeit mit denjenigen einer kostengünstigen Serienfertigung kombiniert.

Ferner wird die Aufgabe gelöst durch ein Kunststoff enthaltendes Formteil, erhältlich oder erhalten nach einem Urformverfahren oder Umformverfahren gemäß einer der weiter oben beschriebenen Ausführungsformen.

Bei einem solchen Kunststoff enthaltenden Formteil handelt es sich um ein geschäumtes Werkstück, insbesondere um einen Thermoplastschaum oder einen Duroplastschaum. Alternativ ist auch ein Kunststoff enthaltendes nichtgeschäumtes Werkstück herstellbar.

In einer Ausführungsform des Kunststoff enthaltenden Formteils, erhältlich oder erhalten nach einem Urformverfahren oder Umformverfahren gemäß einer der weiter oben beschriebenen Ausführungsformen, handelt es sich um einen Spritzgussschaum, einen Partikelschaum, einen Polyurethanschaum oder einen Silikonschaum. Die vorgenannten Kunststoff enthaltenden Schäume sind mittels des beanspruchten Urformverfahrens erhältlich. Im Falle eines Spritzgussschaums, z. B. für Instrumententafelträger für PKWs und Margarinebecher, oder eines Partikelschaums, z. B. für Verpackungen, Fahrradhelme und Schuhinnensohlen oder -außensohlen, ist das Urformverfahren insbesondere als Thermoplastspritzgießverfahren ausgestaltet. Polyurethanschäume (PUR-Schäume), z. B. für Fahrradsattel, Kissen, PKW-Sitze, und Silikonschäume sind insbesondere mittels eines als Duroplastspritzgießverfahren ausgestalteten Urformverfahrens erhältlich.

Sämtliche Kunststoff enthaltende Formteile, erhältlich oder erhalten nach einem Urformverfahren oder Umformverfahren gemäß einer der weiter oben beschriebenen Ausführungsformen, zeichnen sich insbesondere dadurch aus, dass sie hinsichtlich Formgenauigkeit und Oberflächenstruktur eine vergleichsweise hohe Präzision und damit Qualität aufweisen. Eine mechanische Nachbearbeitung, z. B. durch Fräsen, ist vorteilhafterweise unnötig. Weiterhin vorteilhaft ist, dass - verglichen mit Verfahren, bei denen das formgebende Werkzeug und/oder der formgebende Wechseleinsatz auszutauschen ist - sowohl die Rüstzeit als auch die Entwicklungszeit (engl. *time to market*) deutlich verkürzt sind oder gegebenenfalls vollständig entfallen. Denn eine Änderung der Geometrie eines Standardprodukts ist innerhalb eines kontinuierlich geführten Fertigungsprozesses möglich, d. h. auch während der Herstellung einer Produktserie, erforderlichenfalls sogar von Formteil zu Formteil. Aufgrund der Verwendung eines formflexiblen Einsatzes gemäß einer der oben beschriebenen Ausführungsformen und der damit vorhandenen Möglichkeit, eine ortsaufgelöste Eigenschaftsgradierung vorzunehmen, sind beispielsweise auch Kunststoff enthaltende Formteile erhältlich, welche sich auch durch maßgeschneiderte mechanische Eigenschaften auszeichnen. Ein Beispiel dafür ist ein hinsichtlich des Körpergewichts eines Kunden optimiertes Dämpfungsverhalten eines Laufschuhs. Darüber hinaus sind auch Formteile herstellbar, welche auf anderem Wege, z. B. mittels Fräsen, nicht zugänglich sind.

Insgesamt sind mittels des weiter oben beschriebenen Urformverfahrens beziehungsweise mittels des weiter oben beschriebenen Umformverfahrens Kunststoff enthaltende Formteile und Formen unterschiedlicher Geometrien in einem jeweils kontinuierlich geführten Verfahren, auch in Kleinserien- oder Einzelteilfertigung, einfach, rasch, präzise, reproduzierbar und ökonomisch herstellbar. Mithin sind bei den auf diese Weise erhältlichen oder erhaltenen Kunststoff enthaltenden Formteile die Vorteile hoher Individualisierbarkeit mit denjenigen einer kostengünstigen Serienfertigung kombiniert.

Weitere Merkmale, Einzelheiten und Vorteile der Erfindung ergeben sich aus dem Wortlaut der Ansprüche sowie aus der folgenden Beschreibung von Ausführungsbeispielen anhand der Figuren. Es zeigen:
- **Fig.** 1: eine Seitenansicht eines formflexiblen Einsatzes; oben: eine erste Konfiguration von Verstellelementen, unten: eine zweite Konfiguration der Verstellelemente; und
- **Fig. 2**: eine Seitenansicht des formflexiblen Einsatzes aus Fig. 1, wobei eine formflexible Schicht an oberen Endbereichen der Verstellelemente angeordnet ist; oben: eine erste Konfiguration der Verstellelemente, unten: eine zweite Konfiguration der Verstellelemente.

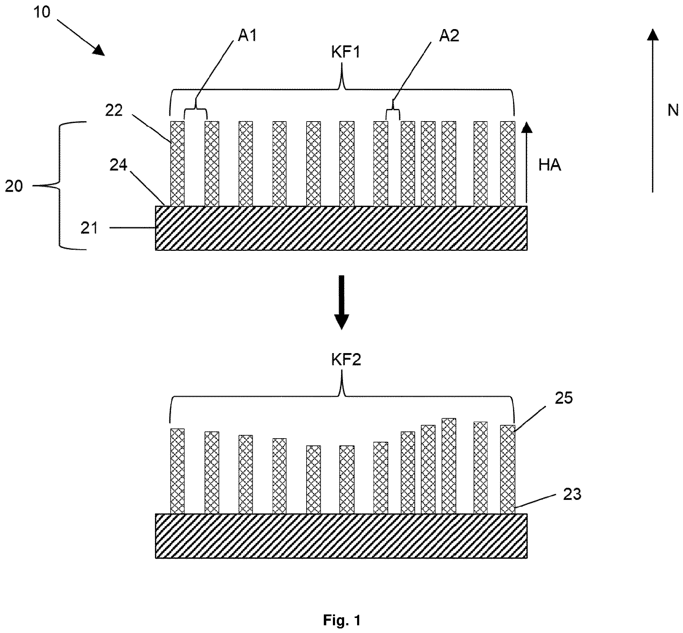

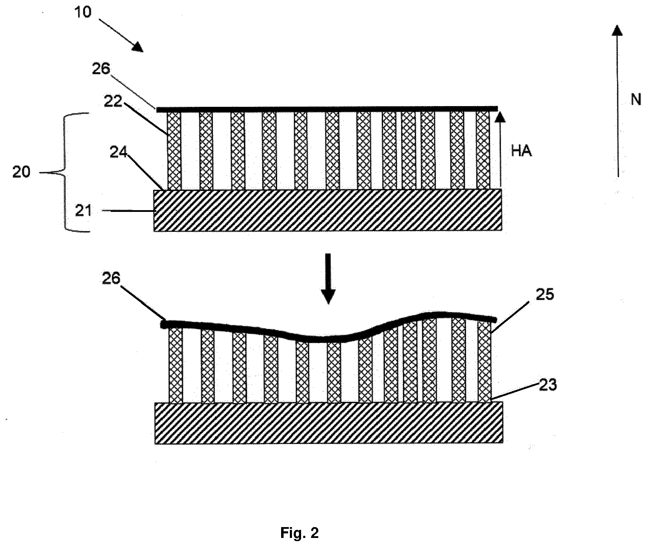

Ein in **Fig. 1** und **Fig. 2** in einer Seitanansicht gezeigter formflexibler Einsatz 10 ist für eine Ausnehmung einer (nicht dargestellten) Werkzeughälfte eines (nicht dargestellten) formflexiblen Werkzeugs vorgesehen.

Bei dem formgebenden Werkzeug handelt es sich um ein Gieß- oder Spritzgießwerkzeug. Bei der Ausnehmung der Werkzeughälfte des formgebenden Werkzeugs handelt es sich im Falle eines Gieß- oder Spritzgießwerkzeugs, welches üblicherweise zwei Werkzeughälften umfasst, um eine Kavität.

Der formflexible Einsatz 10 weist eine Verstelleinheit 20 auf, welche eine Basis 21 und Verstellelemente 22 umfasst. Dabei sind untere Endbereiche 23 der Verstellelemente 22 an einer oberen Seite 24 der Basis 21 in wenigstens einem vordefinierbaren Abstand A oder einem vordefinierbaren Anordnungsmuster M_{A} zueinander angeordnet. Gemäß dem in Fig. 1 gezeigten Ausführungsbeispiel sind die unteren Endbereiche 23 der Verstellelemente 22 an der oberen Seite 24 der Basis 21 in unterschiedlichen Abständen A, nämlich z. B. A1 und A2, zueinander angeordnet. Das kann vorteilhaft sein, um Eigenschaften eines herzustellenden Kunststoff enthaltenden Formteils ortsaufgelöst einstellen zu können und/oder das Formteil beziehungsweise Werkstück vor dem Abkühlprozess und/oder während des Abkühlprozesses, d. h. bis das Formteil formstabil ist, ortsaufgelöst optimal stützen zu können. Möglich ist aber auch ein Anordnungsmuster M_{A} mit einem einzigen, d. h. innerhalb des Anordnungsmusters M_{A} ein- und demselben, vordefinierbaren Abstand A. Unabhängig vom Anordnungsmuster M_{A} verläuft im angeordneten Zustand eine Hauptachse HA jedes Verstellelements 22 parallel zu einer Normalenrichtung N der Basis 21, wobei die Hauptachse HA jedes der Verstellelemente 22 in der Regel identisch mit dessen Longitudinalachse ist. Darüber hinaus kann jedes Verstellelement 22 individuell relativ zu der Normalenrichtung N reversibel längen- und neigungsverstellbar sein. In einer alternativen Ausführungsform des formflexiblen Einsatzes 10 kann vorgesehen sein, dass jedes Verstellelement 22 individuell temperierbar und relativ zu der Normalenrichtung N reversibel längenverstellbar und/oder reversibel neigungsverstellbar ist. Es ist eine erste, an sich bekannte (nicht gezeigte) Antriebseinheit zur Längen- und/oder Neigungsverstellung wenigstens eines längen- und/oder neigungsverstellbaren Verstellelements 22 vorgesehen. Gegebenenfalls ist zusätzlich zu der ersten Antriebseinheit zur Längen- und/oder Neigungsverstellung wenigstens eines längen- und/oder neigungsverstellbaren Verstellelements 22 eine an sich bekannte (nicht gezeigte) Temperiereinheit zur Temperierung wenigstens eines temperierbaren Verstellelements 22 vorgesehen. Dabei ist der ersten Antriebseinheit eine erste, an sich bekannte (nicht gezeigte) Steuer- und/oder Regeleinheit zuordenbar oder zugeordnet, mittels derer die Längen- und/oder Neigungsverstellung des wenigstens einen längen- und/oder neigungsverstellbaren Verstellelements 22 relativ zu der Normalenrichtung N steuerbar und/oder regelbar ist. Der Temperiereinheit ist eine zweite, an sich bekannte (nicht gezeigte) Steuer- und/oder Regeleinheit zuordenbar oder zugeordnet, mittels derer eine Soll-Temperatur T_{S} des wenigstens einen temperierbaren Verstellelements 22 steuerbar und/oder regelbar ist.

Weiterhin ist vorgesehen, dass die erste Antriebseinheit wenigstens einen Antrieb aufweist. Dabei ist jeweils einer der Antriebe einem der längen- und/oder neigungsverstellbaren Verstellelemente 22 zuordenbar oder zugeordnet. Als Antrieb kann ein Linearantrieb vorgesehen sein, z. B. ein Kugelgewindetriebe, ein Rollengewindetriebe, ein Hydraulikzylinder, ein Pneumatikzylinder oder ein elektromechanischer Linearantrieb. Letzterer ist insbesondere ausgebildet als ein Linearmotor mit elektrodynamischem Wirkprinzip oder als ein Linearaktor mit piezoelektrischem, elektrostatischem, elektromagnetischem, magnetostriktivem oder thermoelektrischem Wirkprinzip.

Eine noch andere Variante des formflexiblen Einsatzes 10 sieht vor, dass die Temperiereinheit wenigstens einen Temperatursensor aufweist. Dabei ist jeweils einer der Temperatursensoren einem der temperierbaren Verstellelemente 22 zur Ermittlung einer Ist-Temperatur T_{I} zuordenbar oder zugeordnet. Unter Verwendung der zweiten Steuer- und/oder Regeleinheit erfolgt ein Vergleich der Ist-Temperatur T_{I} des jeweiligen temperierbaren Verstellelements 22 mit der Soll-Temperatur T_{S} des jeweiligen temperierbaren Verstellelements 22. Anschließend erfolgt gegebenenfalls eine Korrektur der Ist-Temperatur T_{I} nach oben oder unten. Dadurch ist vorteilhafterweise eine für den jeweiligen Herstellungsprozess und/oder Verfahrensschritt vorgebbare Temperatur des wenigstens einen temperierbaren Verstellelements 22 einstellbar.

Der formflexible Einsatz 10 kann je nach Anwendung unterschiedliche Materialien aufweisen, wie z. B. ein Metall, eine Legierung, eine Keramik oder ein Polymer. Alternativ kann er vollständig aus einem dieser Materialien oder einem Materialgemisch gefertigt sein. Hinsichtlich der Auswahl eines Materials, der Anordnung der unteren Endbereiche 23 der Verstellelemente 22 zueinander, seiner Dimensionierung sowie der geometrischen Grundform seiner Basis, z. B. viereckig, rund, oval, ist der formflexible Einsatz 10 im Wesentlichen unbeschränkt. Mithin sind seine Variations- und Verwendungsmöglichkeiten im Bereich der Herstellung von Kunststoff enthaltenden Formteilen und Formen nahezu unbegrenzt.

Durch Verwendung des formflexiblen Einsatzes 10 in einem formgebenden Werkzeug wird ein rekonfigurierbares beziehungsweise formflexibles formgebendes Werkzeug zur Verfügung gestellt, mittels dessen Kunststoff enthaltende Formteile und Formen unterschiedlicher Geometrien in einem kontinuierlichen Verfahren einfach, rasch, präzise, reproduzierbar und ökonomisch, auch in Kleinserien- oder Einzelteilfertigung, herstellbar sind. Denn die Verstellelemente 22 des formflexiblen Einsatzes 10 sind
- je nach Ausführungsform des formflexiblen Einsatzes 10 - innerhalb des formgebenden Werkzeugs individuell und somit ortsaufgelöst
   a) relativ zu der Normalenrichtung N reversibel längen- und neigungsverstellbar
      oder
   b) temperierbar und relativ zu der Normalenrichtung N reversibel längenverstellbar
      oder
   c) temperierbar und relativ zu der Normalenrichtung N reversibel neigungsverstellbar
      oder
   d) temperierbar und relativ zu der Normalenrichtung N reversibel längen- und neigungsverstellbar.

Eine für das zu produzierende Kunststoff enthaltende Formteil maßgeschneiderte Konfiguration der Verstellelemente 22 ist - nach Auswahl eines hinsichtlich Material, Dimensionierung, der geometrischen Grundform seiner Basis 21, z. B. viereckig, rund, oval, sowie der Anordnung der unteren Endbereiche 23 der Verstellelemente 22 zueinander geeigneten formflexiblen Einsatzes 10 - anhand der Konstruktionsdaten des herzustellenden Formteils computergestützt durchführbar. Die Konfiguration - Länge, Neigung relativ zu der Normalenrichtung N, Temperatur T_{S} - der Verstellelemente 22 ist ohne Entnahme und/oder Austauschen des formflexiblen Einsatzes 10 aus dem formgebenden Werkzeug einfach, rasch und reproduzierbar möglich. Im Falle eines Urformverfahrens, insbesondere eines Gieß- oder Spritzgießverfahrens, wird durch die Konfiguration der Verstellelemente 22 innerhalb wenigstens einer der beiden Werkzeughälften des jeweiligen formgebenden Werkzeugs die Negativform des herzustellenden Produkts erzeugt. Bei einem Umformverfahren wird durch die Konfiguration der Verstellelemente 22 innerhalb einer einzigen Werkzeughälfte des formgebenden Werkzeugs die Innen- oder Außenkontur des zu produzierenden Formteils nachgebildet, in Abhängigkeit davon, ob eine Positiv- oder Negativformung vorgesehen ist. Beim Negativformen kann zusätzlich ein Oberstempel beziehungsweise Vorstreckstempel vorgesehen sein, welcher ebenfalls einen hier beanspruchten formflexiblen Einsatz 10 aufweisen kann.

Bei der in Fig. 2 dargestellten Ausführungsform des formflexiblen Einsatzes 10 ist vorgesehen, dass an oberen Endbereichen 25 der Verstellelemente 22 eine formflexible Schicht 26 angeordnet ist. Die Anordnung der formflexiblen Schicht 26 kann vor oder nach der Konfiguration der Verstellelemente 22 erfolgen. Weist die formflexible Schicht 26 ein Polymer, eine Kunststofffaser oder eine Naturfaser auf oder ist aus einem dieser Materialien oder einer Mischung dieser Materialien gefertigt, ist sie in der Regel vorteilhafterweise reversibel verformbar, d. h. elastisch. Somit ist eine Korrektur oder eine vorsichtige Annäherung der Konfiguration der Verstellelemente 22 vorteilhafterweise auch nach Einbringung der formflexiblen Schicht 26 in das formgebende Werkzeug und Anordnung an den oberen Endbereichen 25 der Verstellelemente 22 des formflexiblen Einsatzes 10 möglich. Das Vorsehen einer formflexiblen Schicht 26 kann insbesondere dann vorteilhaft oder gewünscht sein, wenn ein Urformverfahren durchgeführt werden soll, z. B. zur Herstellung einer mehrere Schichten umfassende Schuhinnensohle. Die formflexible Schicht 26 kann beispielsweise als Membran oder als Folie ausgebildet sein oder mit einer Membran oder einer Folie versehen sein. Dabei ist die formflexible Schicht 26 kraft-, form- und/oder reibschlüssig und/oder stoffschlüssig mit den oberen Endbereichen 25 der Verstellelemente 22 verbindbar. Sie kann also als ein Bestandteil des formflexiblen Einsatzes 10 vorgesehen sein. Insbesondere im Falle einer kraft-, form- und/oder reibschlüssigen Verbindung zwischen den oberen Endbereichen 25 der Verstellelemente 22 und der formflexiblen Schicht 26 ist die formflexible Schicht 26 bei Bedarf austauschbar, z. B. bei Verschleiß oder aufgrund einer Variation der angestrebten Eigenschaften des herzustellenden Formteils. Alternativ kann die formflexible Schicht 26 als ein Bestandteil des herzustellenden Formteils vorgesehen sein. Dann ist nach dem Entformen des formstabilen Formteils aus dem formgebenden Werkzeug, umfassend den formflexiblen Einsatz 10, und vor der Herstellung eines weiteren Formteils eine neue formflexible Schicht 26 an den oberen Endbereichen 25 der Verstellelemente 22 anzuordnen.

Insbesondere vorteilhaft ist, dass durch Verwendung des formflexiblen Einsatzes 10 gemäß Fig. 1 oder Fig. 2 in einem formgebenden Werkzeug im Rahmen eines Verfahrens zur Herstellung Kunststoff enthaltender Formteile Zeit und Kosten gespart werden. Zum einen entfallen Beschaffung, Wartung und gegebenenfalls Reparatur einer Vielzahl formgebender Werkzeuge und/oder von Wechseleinsätzen. Zum anderen werden Unterbrechungen im Verfahrensablauf für den Austausch formgebender Werkzeuge und/oder von Wechseleinsätzen vermieden. Zudem führt die Verwendung des formflexiblen Einsatzes 10 zu einer starken Vereinfachung und damit gegebenenfalls auch geringeren Störanfälligkeit eines Verfahrens zur Herstellung Kunststoff enthaltender Formteile. Weiterhin vorteilhaft ist, dass der formflexible Einsatz 10 im Falle einer kraft-, form- und/oder reibschlüssigen Anordnung in der Ausnehmung einer Werkzeughälfte vollständig und unversehrt - einschließlich sämtlicher Antriebseinheiten - entnehmbar ist. Dies ist besonders vorteilhaft, weil durch die einfache und rasche Entnahme eine Wartung und/oder Reparatur des formflexiblen Einsatzes 10 vergleichsweise zeit- und damit kostensparend möglich ist.

Ein weiterer Vorteil des formflexiblen Einsatzes 10 besteht darin, dass seine Verwendung in einem formgebenden Werkzeug im Rahmen der heutzutage im Trend liegenden kundenspezifischen Massenproduktion (engl. *Mass Customization*) zu einer Prozessvereinfachung und damit Zeit- und Kostenersparnis führt. Vorteilhafterweise werden bei Verwendung des formflexiblen Einsatzes 10 die Vorteile hoher Individualisierbarkeit mit denjenigen einer kostengünstigen Serienfertigung kombiniert. Ausgehend von Konstruktionsdaten, welche für eine Standardversion eines herzustellenden Formteils vorliegen, z. B. eines Partikelschaumteils für einen Sportschuh oder einen Fahrradhelm, können kundenspezifische Anpassungen reproduzierbar, präzise, einfach, rasch und vergleichsweise kostengünstig vorgenommen werden. Dazu sind lediglich Konstruktionsdaten der vom Kunden gewünschten Abwandlung der Standardversion eines Kunststoff enthaltenden Formteils zu ermitteln und gegebenenfalls umzuwandeln. Anhand dieser Daten erfolgt eine maßgeschneiderte Konfiguration der Verstellelemente 22 des jeweiligen formflexiblen Einsatzes 10. Variationsmöglichkeiten hinsichtlich der Verfahrensführung bestehen im Falle eines Urformverfahrens - unter Verwendung des formflexiblen Einsatzes 10 - insbesondere bezüglich der Konfiguration der Verstellelemente 22, gegebenenfalls auch während des Prozesses zur Durchführung von Kompressions- und Dekompressionshüben, insbesondere zur aktiven lokalen, d. h. ortsaufgelösten, Beeinflussung der Schaumstruktur und anderer Formteileigenschaften, wie z. B. einer bereichsabhängig oder punktuell variierenden Formteilhärte. Weiterhin variabel ist das Füllvolumen der Ausnehmung, d. h. der Kavität der jeweiligen Gieß- oder Spritzgießform, und infolgedessen das Dosiervolumen, insbesondere bei PUR-Schäumen, unter Berücksichtigung des Formteilvolumens und der gewünschten Formteilhärte. Eine weitere Variationsmöglichkeit stellt die Zusammensetzung des zu plastifizierenden Materials, insbesondere bei PUR-Schäumen dar, unter Berücksichtigung des Formteilvolumens und der gewünschten Formteilhärte.

Das Urformverfahren - unter Verwendung des formflexiblen Einsatzes 10 - kann beispielsweise als Thermoplastspritzgießverfahren ausgestaltet sein. Damit sind insbesondere Spritzgussschäume herstellbar, z. B. für Instrumententafelträger für PKWs und Margarinebecher. Darüber hinaus sind mittels eines Thermoplastspritzgießverfahrens Partikelschäume, z. B. für Fahrradhelme, Schuhinnensohlen, Schuhaußensohlen, mehrere Schichten aufweisende Innen- und Außensohlen, vollständige Schuhsohlen, umfassend Innen- und Außensohle, und für Verpackungen zugänglich. Besonders vorteilhaft ist, dass unter Verwendung des in Fig. 1 oder Fig. 2 dargestellten formflexiblen Einsatzes 10 eine kundenspezifische Anpassung eines Massenproduktes möglich ist. So kann zum Beispiel bei der Herstellung eines Partikelschaums für einen Fahrradhelm die Kopfform des jeweiligen Kunden berücksichtigt und damit eine im Vergleich zum Standardprodukt deutlich höhere Passgenauigkeit erzielt werden. Im Falle eines Laufschuhs betrifft eine solche kundenindividuelle Anpassung beispielsweise die Wölbung der Innensohle. Mittels eines Thermoplastspritzgießverfahrens sind vorteilhafterweise auch maßgeschneiderte, d. h. an ein als Einzelstück oder ein in Kleinserie hergestelltes Produkt angepasste, Verpackungen, einfach und kostengünstig in einem kontinuierlich geführten Verfahren herstellbar.

Alternativ kann das Urformverfahren - unter Verwendung des formflexiblen Einsatzes 10 - beispielsweise als Duroplastspritzgießverfahren ausgestaltet sein, wobei als Produkte insbesondere PUR-Schäume, z. B. für Fahrradsattel, Kissen, PKW-Sitze, und Silikonschäume erhältlich sind oder erhalten werden.

Man erkennt, dass die Erfindung einen formflexiblen Einsatz für eine Ausnehmung einer Werkzeughälfte eines formgebenden Werkzeugs betrifft. Er weist eine Verstelleinheit auf, umfassend eine Basis und wenigstens zwei Verstellelemente. Untere Endbereiche der Verstellelemente sind an einer oberen Seite der Basis anordenbar. Jedes Verstellelement ist individuell reversibel längen- und neigungsverstellbar oder temperierbar und reversibel längenverstellbar und/oder neigungsverstellbar. Gegenstand der Erfindung sind auch ein formgebendes Werkzeug, umfassend einen solchen formflexiblen Einsatz, und die Verwendung eines hier beschriebenen formflexiblen Einsatzes zur Herstellung eines formgebenden Werkzeugs. Zudem betrifft die Erfindung ein Verfahren zur Herstellung eines solchen formgebenden Werkzeugs, welches unter Verwendung eines hier beschriebenen formflexiblen Einsatzes durchgeführt wird, sowie ein formgebendes Werkzeug, erhältlich nach einem solchen Verfahren. Gegenstand der Erfindung sind außerdem die Verwendung eines hier beschriebenen formflexiblen Einsatzes zur Herstellung eines Kunststoff enthaltenden Formteils, zwei Verfahren zur Herstellung eines Kunststoff enthaltenden Formteils, welche jeweils unter Verwendung eines hier beanspruchten formflexiblen Einsatzes durchgeführt werden, und ein Kunststoff enthaltendes Formteil, erhältlich nach einem dieser Verfahren.

Die Verwendung eines hier beanspruchten formflexiblen Einsatzes in einem formgebenden Gieß- oder Spritzgießwerkzeug ermöglicht vorteilhafterweise die einfache, rasche, präzise, reproduzierbare und ökonomische Herstellung Kunststoff enthaltender Formteile und Formen unterschiedlicher Geometrien in einem kontinuierlich geführten Verfahren, und zwar auch in Kleinserien- oder Einzelteilfertigung. Die Vorteile hoher Individualisierbarkeit werden mit denjenigen einer kostengünstigen Serienfertigung kombiniert.

Sämtliche Kunststoff enthaltende Formteile, erhältlich oder erhalten nach einem hier beschriebenen Urformverfahren oder Umformverfahren - unter Verwendung eines formflexiblen Einsatzes nach einer der weiter oben beschriebenen Ausführungsformen , weisen hinsichtlich Formgenauigkeit und Oberflächenstruktur eine vergleichsweise hohe Präzision und damit Qualität auf. Eine mechanische Nachbearbeitung, z. B. durch Fräsen, ist vorteilhafterweise unnötig. Weiterhin vorteilhaft ist, dass - verglichen mit Verfahren, bei denen das formgebende Werkzeug und/oder der formgebende Wechseleinsatz auszutauschen ist - sowohl die Rüstzeit als auch die Entwicklungszeit (engl. *time to market*) deutlich verkürzt sind oder gegebenenfalls vollständig entfallen. Denn eine Änderung der Geometrie eines Standardprodukts ist innerhalb eines kontinuierlich geführten Fertigungsprozesses möglich, d. h. auch während der Herstellung einer Produktserie, erforderlichenfalls sogar von Formteil zu Formteil. Die Verwendung eines hier beanspruchten formflexiblen Einsatzes eröffnet die Möglichkeit, eine ortsaufgelöste Eigenschaftsgradierung vorzunehmen. Es sind beispielsweise auch Kunststoff enthaltende Formteile erhältlich, welche sich auch durch maßgeschneiderte mechanische Eigenschaften auszeichnen. Ein Beispiel dafür ist ein hinsichtlich des Körpergewichts eines Kunden optimiertes Dämpfungsverhalten eines Laufschuhs. Darüber hinaus sind auch Formteile herstellbar, welche auf anderem Wege, z. B. mittels Fräsen, nicht zugänglich sind.

### Bezugszeichenliste

- 10: formflexibler Einsatz
- 20: Verstelleinheit
- 21: Basis
- 22: Verstellelement
- 23: unterer Endbereich eines Verstellelements
- 24: obere Seite der Basis
- 25: oberer Endbereich eines Verstellelements
- 26: formflexible Schicht
- M_{A}: Anordnungsmuster der Verstellelemente
- KF1: erste Konfiguration der Verstellelemente
- KF2: zweite Konfiguration der Verstellelemente
- A, A1, A2: Abstand zwischen Verstellelementen innerhalb eines Anordnungsmusters
- N: Normalenrichtung
- HA: Hauptachse eines Verstellelements

## Patentansprüche

1. Gieß- oder Spritzgießwerkzeug, umfassend
- eine erste Werkzeughälfte, welche eine erste Ausnehmung aufweist,
- eine zweite Werkzeughälfte, welche eine zweite Ausnehmung aufweist,
- einen ersten formflexiblen Einsatz (10), welcher in der ersten Ausnehmung der ersten Werkzeughälfte anordenbar ist,
und
- einen zweiten formflexiblen Einsatz (10), welcher in der zweiten Ausnehmung der zweiten Werkzeughälfte anordenbar ist,
wobei die erste Ausnehmung der ersten Werkzeughälfte und die zweite Ausnehmung der zweiten Werkzeughälfte derart ausgebildet und zueinander anordenbar sind, dass in einem Betriebszustand des formgebenden Werkzeugs ein formgebender Hohlraum vorliegt,
wobei der erste und zweite formflexible Einsatz (10) eine Verstelleinheit (20) aufweist, welche umfasst:
▪ eine Basis (21),
und
▪ wenigstens zwei Verstellelemente (22),
wobei
- untere Endbereiche (23) der Verstellelemente (22) an einer oberen Seite (24) der Basis (21) in wenigstens einem vordefinierbaren Abstand (A) zueinander anordenbar sind,
- im angeordneten Zustand eine Hauptachse (HA) jedes Verstellelements (22) parallel zu einer Normalenrichtung (N) der Basis (21) verläuft
und
- jedes Verstellelement (22) individuell
i. relativ zu der Normalenrichtung (N) reversibel längen- und neigungsverstellbar
oder
ii. temperierbar
und
relativ zu der Normalenrichtung (N) reversibel längenverstellbar und/oder reversibel neigungsverstellbar
ist, wobei zur Neigungsverstellung wenigstens ein mehrteilig ausgebildetes Verstellelement (22) vorgesehen ist, welches wenigstens zwei Segmente aufweist,
wobei die wenigstens zwei Segmente individuell
- relativ zu der Normalenrichtung (N) reversibel neigungsverstellbar und/oder
- relativ zu der Normalenrichtung (N) reversibel längenverstellbar sind; wobei eine formflexible Schicht (26) an den oberen Endbereichen (25) der Verstellelemente (22) anordenbar ist.

2. Gieß- oder Spritzgießwerkzeug nach Anspruch 1, wobei
die Verstellelemente (22) unabhängig voneinander kraft-, form- und/oder reibschlüssig und/oder stoffschlüssig mit der oberen Seite (24) der Basis (21) der Verstelleinheit (20) verbindbar sind.

3. Gieß- oder Spritzgießwerkzeug nach Anspruch 2, wobei
eine erste Antriebseinheit zur Längen- und/oder Neigungsverstellung wenigstens eines längen- und/oder neigungsverstellbaren Verstellelements (22) vorgesehen ist, wobei der ersten Antriebseinheit eine erste Steuer- und/oder Regeleinheit zuordenbar ist, mittels derer die Längen- und/oder Neigungsverstellung des wenigstens einen längen- und/oder neigungsverstellbaren Verstellelements (22) relativ zu der Normalenrichtung (N) steuerbar und/oder regelbar ist.

4. Gieß- oder Spritzgießwerkzeug nach Anspruch 2 oder 3, wobei
eine Temperiereinheit zur Temperierung wenigstens eines temperierbaren Verstellelements (22) vorgesehen ist, wobei der Temperiereinheit eine zweite Steuer- und/oder Regeleinheit zuordenbar ist, mittels derer eine Soll-Temperatur Ts des wenigstens einen temperierbaren Verstellelements (22) steuerbar und/oder regelbar ist.

5. Gieß- oder Spritzgießwerkzeug nach Anspruch 4, wobei
die erste Antriebseinheit wenigstens einen Antrieb aufweist, wobei jeweils einer der Antriebe einem der längen- und/oder neigungsverstellbaren Verstellelemente (22) zuordenbar ist.

6. Gieß- oder Spritzgießwerkzeug nach Anspruch 4 oder 5, wobei
die Temperiereinheit wenigstens einen Temperatursensor aufweist, wobei jeweils einer der Temperatursensoren einem der temperierbaren Verstellelemente (22) zur Ermittlung einer Ist-Temperatur T_{I} zuordenbar ist.

7. Verfahren zur Herstellung eines zwei Werkzeughälften umfassenden Gieß- oder Spritzgießwerkzeugs, unter Verwendung jeweils eines formflexiblen Einsatzes (10) umfassend die folgenden Schritte:
a) Vorsehen einer ersten Werkzeughälfte, welche eine erste Ausnehmung umfasst,
b) Einbringen eines ersten formflexiblen Einsatzes (10) in die erste Ausnehmung der ersten Werkzeughälfte
und
c) Wiederholung der Schritte a) und b) zur Herstellung einer zweiten Werkzeughälfte umfassend eine zweite Ausnehmung und einen zweiten formflexiblen Einsatz (10),
wobei die erste Ausnehmung der ersten Werkzeughälfte und die zweite Ausnehmung der zweiten Werkzeughälfte derart ausgebildet und zueinander anordenbar sind, dass in einem Betriebszustand des formgebenden Werkzeugs ein formgebender Hohlraum vorliegt,
wobei der erste und zweite formflexible Einsatz (10) eine Verstelleinheit (20) aufweist, welche umfasst:
▪ eine Basis (21),
und
▪ wenigstens zwei Verstellelemente (22),
wobei
- untere Endbereiche (23) der Verstellelemente (22) an einer oberen Seite (24) der Basis (21) in wenigstens einem vordefinierbaren Abstand (A) zueinander anordenbar sind,
- im angeordneten Zustand eine Hauptachse (HA) jedes Verstellelements (22) parallel zu einer Normalenrichtung (N) der Basis (21) verläuft
und
- jedes Verstellelement (22) individuell
i. relativ zu der Normalenrichtung (N) reversibel längen- und neigungsverstellbar oder
ii. temperierbar
und
relativ zu der Normalenrichtung (N) reversibel längenverstellbar und/oder reversibel neigungsverstellbar
ist, wobei zur Neigungsverstellung wenigstens ein mehrteilig ausgebildetes Verstellelement (22) vorgesehen ist, welches wenigstens zwei Segmente aufweist,
wobei die wenigstens zwei Segmente individuell
- relativ zu der Normalenrichtung (N) reversibel neigungsverstellbar
und/oder
- relativ zu der Normalenrichtung (N) reversibel längenverstellbar
sind; wobei eine formflexible Schicht (26) an den oberen Endbereichen (25) der Verstellelemente (22) anordenbar ist.

8. Verwendung eines Gieß- oder Spritzgießwerkzeug gemäß einem der Ansprüche 1 bis 6 zur Herstellung eines Kunststoff enthaltenden Formteils.

9. Verfahren, insbesondere ein Urformverfahren, zur Herstellung eines Kunststoff enthaltenden Formteils unter Verwendung eines Gieß- oder Spritzgießwerkzeug gemäß einem der Ansprüche 1 bis 6,
umfassend die folgenden Schritte:
a) Zurverfügungstellen und/oder Umwandeln von Konstruktionsdaten des herzustellenden Kunststoff enthaltenden Formteils,
b) Vorsehen einer Maschine umfassend
i. eine Plastifizier- und Dosiereinheit,
und
ii. eine Schließeinheit
umfassend ein formgebendes Werkzeug, insbesondere ein Gieß- oder Spritzgießwerkzeug,
wobei das formgebende Werkzeug wenigstens eine Werkzeughälfte umfasst, welche eine Ausnehmung aufweist,
wobei
- der wenigstens eine formflexible Einsatz (10) in der Ausnehmung anordenbar ist, und
- eine erste Konfiguration (KF1) von Verstellelementen (22) des wenigstens einen formflexiblen Einsatzes (10) vorgesehen ist,
wobei mittels der ersten Konfiguration (KF1) der Verstellelemente (22) innerhalb der wenigstens einen Werkzeughälfte eine Negativform F1 oder eine erste Hälfte einer Negativform G1 einer Standardvariante des Kunststoff enthaltenden Formteils zur Verfügung gestellt wird,
c) Vorsehen einer Verfahrenssteuerung umfassend
- eine Rechnereinheit
und
- eine Schnittstelle zur Kommunikation mit der das formgebende Werkzeug umfassenden Maschine,
d) Zuführen der zur Verfügung gestellten und/oder umgewandelten Konstruktionsdaten aus Schritt a),
an
- wenigstens eine Steuer- und/oder Regeleinheit der Plastifizier- und Dosiereinheit zur Regelung eines Dosiervolumens und/oder einer Zusammensetzung wenigstens eines zu plastifizierenden Kunststoffs, und
- wenigstens eine Steuer- und/oder Regeleinheit des wenigstens einen formflexiblen Einsatzes (10) zum Einstellen einer zweiten Konfiguration (KF2) der Verstellelemente (22) des wenigstens einen formflexiblen Einsatzes (10),
welche sich von der ersten Konfiguration (KF1) der Verstellelemente (22) aus Schritt b) unterscheidet,
wobei mittels der zweiten Konfiguration (KF2) der Verstellelemente (22) innerhalb der wenigstens einen Werkzeughälfte eine Negativform F2 oder eine erste Hälfte einer Negativform G2 des Kunststoff enthaltenden Formteils zur Verfügung gestellt wird,
und
e) Durchführen des Verfahrens, insbesondere eines Gieß- oder Spritzgießverfahrens.

## Claims

1. A casting or injection molding tool, comprising
- a first tool half comprising a first recess,
- a second tool half comprising a second recess,
- a first flexible insert (10) which is disposable in the first recess of the first tool half,
and
- a second flexible insert (10) which is disposable in the second recess of the second tool half,
the first recess of the first tool half and the second recess of the second tool half being implemented and disposable relative to each other such that a formative cavity is present in an operating state of the formative tool,
the first and second flexible inserts (10) comprising an adjusting unit (20) having:
▪ a base (21),
and
▪ at least two adjusting elements (22),
wherein
- lower end regions (23) of the adjusting elements (22) are disposable on a top side (24) of the base (21) at at least one predefinable distance (A) from each other,
- a main axis (HA) of each adjusting element (22) runs parallel to a normal direction (N) of the base (21) in the disposed state,
and
- each adjusting element (22) is individually
i. reversibly adjustable in length and pitch relative to the normal direction (N),
or
ii. controllable in temperature and
reversibly adjustable in length and/or reversibly adjustable in pitch relative to the normal direction (N),
wherein at least one multipart adjusting element (22) comprising at least two segments is provided for adjusting the pitch, wherein the at least two segments are individually
- reversibly adjustable in pitch relative to the normal direction (N),
and/or
- reversibly adjustable in length relative to the normal direction (N),
wherein a flexible layer (26) is disposable at the top end regions (25) of the adjusting elements (22).

2. The casting or injection molding tool according to claim 1, wherein
the adjusting elements (22) are able to be connected to the top side (24) of the base (21) of the adjusting unit (20) independently of each other in a force-fit, form-fit and/or friction-fit, and/or adhesive manner.

3. The casting or injection molding tool according to claim 2, wherein
a first drive unit is provided for adjusting the length and/or pitch of at least one adjusting element (22) adjustable in length and/or pitch, wherein a first control and/or regulating unit is able to be associated with the first drive unit, by means of which the adjusting in length and/or pitch of the at least one adjusting element (22) adjustable in length and/or pitch relative to the normal direction (N) is able to be controlled and/or regulated.

4. The casting or injection molding tool according to claim 2 or 3, wherein
a temperature-control unit for controlling the temperature of at least one temperature-controllable adjusting element (22) is provided, wherein a second control and/or regulating unit is able to be associated with the temperature-control unit, by means of which a specified temperature Ts of the at least one temperature-controllable adjusting element (22) is able to be controlled and/or regulated.

5. The casting or injection molding tool according to claim 4, wherein
the first drive unit comprises at least one drive, wherein each one of the drives is able to be associated with one of the adjusting elements (22) adjustable in length and/or pitch.

6. The casting or injection molding tool according to claim 4 or 5, wherein
the temperature-control unit comprises at least one temperature sensor, wherein each one of the temperature sensors is able to be associated with one of the temperature-controllable adjusting elements (22) for determining an actual temperature T_{I}.

7. A method for producing a casting or injection molding tool comprising two tool halves, using one flexible insert (10) each, comprising the following steps:
a) providing a first tool half comprising a first recess,
b) introducing a first flexible insert (10) into the first recess of the first tool half, and
c) repeating the steps a) and b) for producing a second tool half comprising a second recess and a second flexible insert (10),
the first recess of the first tool half and the second recess of the second tool half being implemented and disposable relative to each other such that a formative cavity is present in an operating state of the formative tool,
the first and second flexible inserts (10) comprising an adjusting unit (20) having:
**▪**a base (21),
and
▪at least two adjusting elements (22),
wherein
- lower end regions (23) of the adjusting elements (22) are disposable on a top side (24) of the base (21) at at least one predefinable distance (A) from each other,
- a main axis (HA) of each adjusting element (22) runs parallel to a normal direction (N) of the base (21) in the disposed state,
and
- each adjusting element (22) is individually
i. reversibly adjustable in length and pitch relative to the normal direction (N),
or
ii. controllable in temperature
and
reversibly adjustable in length and/or reversibly adjustable in pitch relative to the normal direction (N),
wherein at least one multipart adjusting element (22) comprising at least two segments is provided for adjusting the pitch,
wherein the at least two segments are individually
- reversibly adjustable in pitch relative to the normal direction (N), and/or
- reversibly adjustable in length relative to the normal direction (N),
wherein a flexible layer (26) is disposable at the top end regions (25) of the adjusting elements (22).

8. The use of a casting or injection molding tool according to any one of the claims 1 through 6 for producing a molded part comprising plastic material.

9. A method, particularly a primary shaping method, for producing a molded part comprising plastic material using a casting or injection molding tool according to any one of the claims 1 through 6,
comprising the following steps:
a) providing and/or converting design data of the molded part comprising plastic material to be produced,
b) providing a machine comprising
i. a plasticizing and metering unit,
and
ii. a clamping unit
comprising a formative tool, particularly a casting or injection molding tool, wherein the formative tool comprises at least one tool half having a recess, wherein
- the at least one flexible insert (10) is disposable in the recess, and
- a first configuration (KF1) of adjusting elements (22) of the at least one flexible insert (10) is provided,
wherein a negative shape F1 or a first half of a negative shape G1 of a standard variant of the molded part comprising plastic material is provided by means of the first configuration (KF1) of the adjusting elements (22) within the at least one tool half,
c) providing a process controller comprising
- a computer unit and
- an interface for communicating with the machine comprising the formative tool,
d) feeding in the design data provided and/or converted from step a),
to
- at least one control and/or regulating unit of the plasticizing and metering unit for regulating a metering volume and/or a composition of at least one plastic material to be plasticized,
and
- at least one control and/or regulating unit of the at least one flexible insert (10) for setting a second configuration (KF2) of the adjusting elements (22) of the at least one flexible insert (10)
differing from the first configuration (KF1) of the adjusting elements (22) from step b),
wherein a negative shape F2 or a first half of a negative shape G2 of the molded part comprising plastic material is provided by means of the second configuration (KF2) of the adjusting elements (22) within the at least one tool half,
and
e) performing the method, particularly a casting or injection molding method.

## Revendications

1. Outil de moulage par coulée ou par injection, comprenant
- une première moitié d'outil, qui présente un premier évidement,
- une deuxième moitié d'outil, qui présente un deuxième évidement,
- un premier insert (10) flexible en forme, qui peut être disposé dans le premier évidement de la première moitié d'outil,
et
- un deuxième insert (10) flexible en forme, qui peut être disposé dans le deuxième évidement de la deuxième moitié d'outil,
le premier évidement de la première moitié d'outil et le deuxième évidement de la deuxième moitié d'outil étant réalisés et pouvant être disposés l'un par rapport à l'autre de sorte que, dans un état de fonctionnement de l'outil de formage, il existe un espace de formage creux,
les premier et deuxième inserts flexibles en forme (10) comprenant une unité de réglage (20), laquelle comprend :
▪ une base (21),
et
▪ au moins deux éléments de réglage (22),
dans lequel
- des zones d'extrémité inférieures (23) des éléments de réglage (22) peuvent être disposées sur un côté supérieur (24) de la base (21) à au moins une distance prédéfinissable (A) les unes des autres,
- à l'état disposé, un axe principal (HA) de chaque élément de réglage (22) s'étend parallèlement à une direction normale (N) de la base (21)
et
- chaque élément de réglage (22), individuellement,
i. est réglable en longueur et en inclinaison de manière réversible par rapport à la direction normale (N)
ou
ii. est réglable en température
et
est réglable en longueur de manière réversible et/ou réglable en inclinaison de manière réversible par rapport à la direction normale (N),
au moins un élément de réglage (22) réalisé en plusieurs parties, qui présente au moins deux segments, étant prévu pour le réglage de l'inclinaison,
les, au moins deux, segments étant individuellement
- réglables en inclinaison de manière réversible par rapport à la direction normale (N),
et/ou
- réglables en longueur de manière réversible par rapport à la direction normale (N) ;
une couche flexible en forme (26) pouvant être disposée sur les zones d'extrémité supérieures (25) des éléments de réglage (22).

2. Outil de moulage par coulée ou par injection selon la revendication 1, dans lequel
les éléments de réglage (22) peuvent être reliés indépendamment les uns des autres par complémentarité de forces et/ou par complémentarité de formes et/ou par friction et/ou par conjugaison de matière avec le côté supérieur (24) de la base (21) de l'unité de réglage (20).

3. Outil de moulage par coulée ou par injection selon la revendication 2, dans lequel
une première unité d'entraînement est prévue pour le réglage en longueur et/ou en inclinaison d'au moins un élément de réglage (22) réglable en longueur et/ou en inclinaison, une première unité de commande et/ou de régulation pouvant être associée à la première unité d'entraînement, au moyen de laquelle le réglage en longueur et/ou en inclinaison de l'au moins un élément de réglage (22) réglable en longueur et/ou en inclinaison par rapport à la direction normale (N) peut être commandé et/ou régulé.

4. Outil de moulage par coulée ou par injection selon la revendication 2 ou 3, dans lequel
une unité de régulation de température est prévue pour réguler la température d'au moins un élément de réglage (22) pouvant être régulé en température, une deuxième unité de commande et/ou de régulation pouvant être associée à l'unité de régulation de température, au moyen de laquelle une température de consigne TI de l'au moins un élément de réglage (22) pouvant être régulé en température peut être commandée et/ou réglée.

5. Outil de moulage par coulée ou par injection selon la revendication 4, dans lequel
la première unité d'entraînement présente au moins un entraînement, l'un des entraînements pouvant être respectivement affecté à l'un des éléments de réglage (22) réglables en longueur et/ou en inclinaison.

6. Outil de moulage par coulée ou par injection selon la revendication 4 ou 5, dans lequel
l'unité de régulation de température présente au moins un capteur de température, l'un des capteurs de température pouvant être respectivement associé à l'un des éléments de réglage (22) pouvant être régulés en température, pour déterminer une température réelle TI.

7. Procédé pour la fabrication d'un outil de moulage par coulée ou par injection comprenant deux moitiés d'outil, par utilisation respectivement d'un insert (10) flexible en forme, comprenant les étapes suivantes :
a) prévoir une première moitié d'outil, qui présente un premier évidement,
b) insérer un premier insert (10) flexible en forme dans le premier évidement de la première moitié d'outil
et
c) répéter les étapes a) et b) pour la fabrication d'une deuxième moitié d'outil comprenant un deuxième évidement et un deuxième insert (10) flexible en forme,
le premier évidement de la première moitié d'outil et le deuxième évidement de la deuxième moitié d'outil étant réalisés et pouvant être disposés l'un par rapport à l'autre de sorte que, dans un état de fonctionnement de l'outil de formage, il existe un espace de formage creux,
les premier et deuxième inserts flexibles en forme (10) comprenant une unité de réglage (20), laquelle comprend :
▪ une base (21),
et
▪ au moins deux éléments de réglage (22),
dans lequel
- des zones d'extrémité inférieures (23) des éléments de réglage (22) peuvent être disposées sur un côté supérieur (24) de la base (21) à au moins une distance prédéfinissable (A) les unes des autres,
- à l'état disposé, un axe principal (HA) de chaque élément de réglage (22) s'étend parallèlement à une direction normale (N) de la base (21)
et
- chaque élément de réglage (22), individuellement,
i. est réglable en longueur et en inclinaison de manière réversible par rapport à la direction normale (N)
ou
ii. est réglable en température
et
est réglable en longueur de manière réversible et/ou réglable en inclinaison de manière réversible par rapport à la direction normale (N),
au moins un élément de réglage (22) réalisé en plusieurs parties, qui présente au moins deux segments, étant prévu pour le réglage de l'inclinaison,
les, au moins deux, segments étant individuellement
- réglables en inclinaison de manière réversible par rapport à la direction normale (N) et/ou
- réglables en longueur de manière réversible par rapport à la direction normale (N) ;
une couche flexible en forme (26) pouvant être disposée sur les zones d'extrémité supérieures (25) des éléments de réglage (22).

8. Utilisation d'un outil de moulage par coulée ou par injection selon l'une quelconque des revendications 1 à 6 pour la fabrication d'une pièce moulée contenant une matière plastique.

9. Procédé, en particulier procédé de moulage primaire, pour la fabrication d'une pièce moulée contenant une matière plastique par utilisation d'un outil de moulage par coulée ou par injection selon l'une quelconque des revendications 1 à 6,
comprenant les étapes suivantes :
a) fournir et/ou transformer des données de conception de la pièce moulée contenant une matière plastique, à fabriquer,
b) prévoir une machine comportant
i. une unité de plastification et de dosage,
et
ii. une unité de fermeture
comprenant un outil de formage, en particulier un outil de moulage par coulée ou par injection,
dans lequel l'outil de formage comprend au moins une moitié d'outil qui présente un évidement,
dans lequel
- l'au moins un insert (10) flexible en forme peut être disposé dans l'évidement, et
- une première configuration (KF1) d'éléments de réglage (22) de l'au moins un insert (10) flexible en forme est prévue, dans lequel un moule négatif F1 ou une première moitié d'un moule négatif G1 d'une variante standard de la pièce moulée contenant une matière plastique est mis(e) à disposition au moyen de la première configuration (KF1) des éléments de réglage (22) à l'intérieur de la, au moins une, moitié d'outil,
c) prévoir une commande de procédé comprenant
- une unité de calcul
et
- une interface pour la communication avec la machine comprenant l'outil de formage,
d) fournir les données de conception fournies et/ou transformées de l'étape a), à
- au moins une unité de commande et/ou de régulation de l'unité de plastification et de dosage afin de réguler un volume de dosage et/ou une composition d'au moins une matière plastique à plastifier,
et
- au moins une unité de commande et/ou de régulation de l'au moins un insert (10) flexible en forme pour régler une deuxième configuration (KF2) des éléments de réglage (22) de l'au moins un insert (10) flexible en forme,
laquelle diffère de la première configuration (KF1) des éléments de réglage (22) de l'étape b),
dans lequel un moule négatif F2 ou une première moitié d'un moule négatif G2 de la pièce moulée contenant une matière plastique est mis(e) à disposition au moyen de la deuxième configuration (KF2) des éléments de réglage (22) à l'intérieur de la, au moins une, moitié d'outil,
et
e) réalisation du procédé, en particulier d'un procédé de moulage par coulée ou par injection.
